# EUROPEAN PATENT SPECIFICATION

(11) **EP 2 737 192 B1**
(45) Date of publication and mention of the grant of the patent: **22.09.2021**
(21) Application number: 12759811.8
(22) Date of filing: 24.07.2012
(51) Int. Cl.: F02D 41/02, F01N 3/025, F01N 3/035

(54) **EXHAUST GAS CONTROL APPARATUS FOR INTERNAL COMBUSTION ENGINES, AND CONTROL METHOD FOR EXHAUST GAS CONTROL APPARATUS FOR INTERNAL COMBUSTION ENGINES**
ABGASSTEUERUNGSVORRICHTUNG FÜR VERBRENNUNGSMOTOREN UND STEUERUNGSVERFAHREN FÜR ABGASSTEUERUNGSVORRICHTUNG FÜR VERBRENNUNGSMOTOREN
APPAREIL DE COMMANDE DE GAZ D'ECHAPPEMENT POUR MOTEURS A COMBUSTION INTERNE ET PROCEDE DE COMMANDE POUR APPAREIL DE COMMANDE DE GAZ D'ECHAPPEMENT POUR MOTEURS A COMBUSTION INTERNE

(30) Priority: 27.07.2011 JP 2011164148
(43) Date of publication of application: 04.06.2014
(73) Proprietor: TOYOTA JIDOSHA KABUSHIKI KAISHA, Aichi-ken 471-8571 (JP)
(72) Inventor: OTA, Hisayoshi, Nishio Aichi 445-0012 (JP); ITABASHI, Shigeru, Toyota-shi, Aichi-ken 471-8571 (JP); YOKOI, Tatsuhisa, Toyota-shi, Aichi-ken 471-8571 (JP)
(74) Representative: Winter, Brandl - Partnerschaft mbB
(86) International application number: PCT/IB2012/001420
(87) International publication number: WO 2013/014514

(56) References cited:
- EP-A1- 1 538 311
- EP-A1- 1 627 998
- WO-A1-2010/000981
- WO-A1-2012/126892
- JP-A- 2006 291 823
- US-A1- 2011 146 245

## Description

### BACKGROUND OF THE INVENTION

### 1. Field of the Invention

The invention relates to an exhaust gas control apparatus for an internal combustion engine and a control method for an exhaust gas control apparatus for an internal combustion engine. More particularly, the invention relates to an exhaust gas control apparatus for an internal combustion engine that includes an exhaust gas cleaning portion that is provided in an exhaust system of a diesel engine and that collects particulate components (particulate matter (PM)) in exhaust gas, and also relates to a control method for an exhaust gas control apparatus for an internal combustion engine.

### 2. Description of Related Art

In recent years, in internal combustion engines, such as vehicle-mounted engines and the like, and, particularly, in diesel engines, a filter, such as a diesel particulate filter (DPF) or the like, is provided in the exhaust system so that particulate components contained in exhaust gas are collected by the filter, in order to reduce the amount of the particulate components released into the atmosphere. The particulate components collected on the filter are burned by oxidation so as to maintain the filter's function of collecting the particulate components. Normally, such a DPF or an exhaust passage upstream of the DPF is provided with an oxidation catalytic converter (DOC) that causes the oxidation of hydrocarbons (HC) and carbon monoxide (CO) contained in exhaust gas and therefore the conversion of those substances into water (H₂O) and carbon dioxide (CO₂).

On another hand, the fuel and the lubricating oil for use in diesel engines and the like generally contain sulfur. If sulfur compounds (SOx) generated from sulfur contained in the fuel or lubricating oil due to combustion of the fuel are adsorbed to the DPF or the DOC, the DPF's function of collecting the particulate components or the DOC's catalytic function declines. Therefore, in related art, when poisoning substances, such as sulfur compounds and the like, are adsorb to the DPF or the DOC, a process of removing the poisoning substances so as to recover the catalytic function is executed. In this process for recovery from the poisoning, for example, the DPF and the DOC are each heated to a predetermined temperature through post-injection of fuel or the like, so that the poisoning substances adsorbed to the DPF and the DOC are desorbed and released from the DPF and the DOC. Prior art document US 2011/0146245 A1 describes a sulfur detection routine in a power system comprising and engine, an aftertreatment system and a controller. Furthermore, for example, in an exhaust gas control apparatus described in Japanese Patent Application Publication No. 2006-291823 (JP 2006-291823 A), a temperature-raising process for releasing the poisoning substances, such as SOx and the like, from the DPF and the DOC is executed together with a temperature-raising process for removing the particulate components deposited in the DPF. As a result, excessive execution of the temperature-raising process for the DOC and the DPF provided in the exhaust system is restrained, so that the fuel for use for the temperature-raising process is saved.

If the frequency of execution of the temperature-raising process for the DOC and/or the DPF is decreased as in the exhaust gas control apparatus described in JP 2006-291823 A, the opportunities of raising the temperatures of the DPF and the DOC, that is, the opportunities of removing SOx accumulated in the DPF and the DOC also decrease, so that the amounts of accumulation of SOx in the DPF and the DOC naturally increase. Then, if the temperature-raising process for the DPF and the DOC with large accumulations of SOx is executed in a situation where the amount of intake air taken into the internal combustion engine is small, the concentrations of SOx discharged from the DPF and the DOC increase, so that SOx in a visible state, that is, in the form of white smoke is emitted into the atmosphere. Furthermore, if the frequency of execution of the temperature-raising process for the DPF and the DOC is increased so as to restrain the generation of such white smoke, the amount of fuel used for the temperature-raising process becomes unignorably large, and the fuel efficiency inevitably deteriorates.

This problem is not limited to the exhaust gas control apparatuses that include a DOC and a DPF provided in the exhaust system, but is generally common to all exhaust gas control apparatuses including an exhaust gas cleaning portion, such as a DPF or the like, which is provided in the exhaust system, and in which the particulate components and the sulfur compounds are deposited and adsorbed.

### SUMMARY OF THE INVENTION

The invention provides an exhaust gas control apparatus, according to claim 1, for an internal combustion engine, which restrains the generation of white smoke by executing a temperature-raising process of raising the temperature of an exhaust gas cleaning portion, such as a DPF, which is provided in the exhaust system of the engine, and saves a temperature-raising energy source, such as fuel, which is used for the temperature-raising process for the exhaust gas cleaning portion. The invention also provides a control method, according to claim 10, for an exhaust gas control apparatus for an internal combustion engine.

A first aspect of the invention relates to an exhaust gas control apparatus for an internal combustion engine, the exhaust gas control apparatus including an exhaust gas cleaning portion which is disposed in an exhaust system of the internal combustion engine mounted in a vehicle, and which collects particulate components contained in exhaust gas, and in which sulfur compounds contained in the exhaust gas are accumulated, wherein in the exhaust gas control apparatus, exhaust gas is cleaned and a recovery process for the exhaust gas cleaning portion is executed. The exhaust gas control apparatus includes control means for estimating an amount of deposition of the particulate components and an amount of accumulation of the sulfur compounds in the exhaust gas cleaning portion, with an oxidation mode and a sulfur release mode being provided as modes in which the temperature of the exhaust gas cleaning portion is controlled to be raised. In the oxidation mode, the particulate components deposited in the exhaust gas cleaning portion are removed from the exhaust gas cleaning portion by oxidizing the particulate components on a condition that the estimated amount of deposition of the particulate components in the exhaust gas cleaning portion has reached a removal-demanding amount of the particulate components. In the sulfur release mode, the sulfur compounds accumulated in the exhaust gas cleaning portion are released from the exhaust gas cleaning portion by a temperature-raising control, wherein a temperature of the exhaust gas cleaning portion is gradually raised from about 500°C to about 550°C, a temperature range in which the generation of white smoke of the sulfur compounds in atmosphere is restrained, when the estimated amount of accumulation of the sulfur compounds reaches a release-demanding amount and when the condition for the oxidation mode is fulfilled. Here, the sulfur release mode is executed prior to the execution of the oxidation mode by the control means.Means of raising the temperature of the exhaust gas cleaning portion include a reducing agent valve or a reducing agent addition device or a glow plug or an electric heater.

It has been confirmed by the inventor that the characteristic of release of the sulfur compounds is correlated with the temperature of the exhaust gas cleaning portion in which the sulfur compounds are accumulated, and that there exists a temperature range in which the sulfur compounds are released from the exhaust gas cleaning portion and the generation of white smoke of the sulfur compounds in the atmosphere is restrained.

Therefore, in the foregoing configuration, the control means executes the temperature-raising control of raising the temperature of the exhaust gas cleaning portion into the aforementioned temperature range, when the sulfur compounds accumulated in the exhaust gas cleaning portion are released. Therefore, it is possible to recover the exhaust gas cleaning portion by releasing the sulfur compounds accumulated in the exhaust gas cleaning portion, while restraining the generation of white smoke of the sulfur compounds. Hence, there is no need to execute the temperature-raising control for the exhaust gas cleaning portion until the amount of accumulation of the sulfur compounds accumulated in the exhaust gas cleaning portion reaches the release-demanding amount at which the release of the sulfur compounds is demanded, for example, in order to maintain the function of the exhaust gas cleaning portion. Thus, it is possible to reduce the number of times (frequency) of executing the temperature-raising control for the exhaust gas cleaning portion, so that the reducing agent used for the temperature raise, such as fuel, and the energy source needed for the temperature raise are saved. As a result, it is possible to save the temperature-raising energy source, such as fuel, used for the temperature-raising control for the exhaust gas cleaning portion provided in the exhaust system while restraining the generation of white smoke of the sulfur compounds through the temperature-raising control for the exhaust gas cleaning portion.

In the exhaust gas control apparatus according to the foregoing aspect, a characteristic of release of the sulfur compounds due to the temperature-raising control for the exhaust gas cleaning portion may be a characteristic in which the sulfur compounds start to be released when the temperature of the exhaust gas cleaning portion reaches the temperature range, and during a period until the temperature of the exhaust gas cleaning portion exceeds the temperature range, the sulfur compounds are gradually released in a low concentration state in which the generation of the white smoke is restrained.

The characteristic of release of the sulfur compounds is a characteristic in which when the temperature of the exhaust gas cleaning portion is in the aforementioned temperature range, the amount of the sulfur compounds released from the exhaust gas cleaning portion per unit time is small, and the sulfur compounds are released at concentration at which the generation of white smoke of the sulfur compounds is restrained. On the other hand, when the temperature of the exhaust gas cleaning portion rises beyond the aforementioned temperature range, the amount of release of the sulfur compounds per unit time tends to increase and white smoke tends to be generated.

Therefore, by executing the temperature-raising control for the exhaust gas cleaning portion in the aforementioned temperature range on the basis of the aforementioned release characteristic, it is possible to release the sulfur compounds from the exhaust gas cleaning portion in the low concentration state, and to accurately restrain the generation of white smoke due to release of the sulfur compounds.

It has been confirmed by the inventor that the temperature range, in which the sulfur compounds are released and generation of white smoke of the sulfur compounds is accurately restrained, is the range of about 500°C to about 550°C according to the general characteristic of the exhaust gas cleaning portion provided in the exhaust system of a vehicle or the like and the general characteristic of fuel or the like. Specifically, if the temperature of the exhaust gas cleaning portion is lower than about 500°C, there is a tendency that the sulfur compounds are not decomposed in the exhaust gas cleaning portion and that the accumulated sulfur compounds are not released from the exhaust gas cleaning portion. If the temperature of the exhaust gas cleaning portion is higher than about 550°C, there is a tendency that the decomposition of the sulfur compounds is accelerated and that the concentration of the sulfur compounds released from the exhaust gas cleaning portion becomes high.

Therefore, in the foregoing configuration, by raising the temperature of the exhaust gas cleaning portion so that the temperature of the exhaust gas cleaning portion is in the range of 500C to 550C when the sulfur compounds are released from the exhaust gas cleaning portion, release of the sulfur compounds from the exhaust gas cleaning portion and restraint of the generation of white smoke are suitably achieved.

In the exhaust gas control apparatus according to the foregoing aspect, in a case where the temperature-raising control for the exhaust gas cleaning portion is to be executed, when the temperature of the exhaust gas cleaning portion is above the temperature range due to high-load operation of the internal combustion engine, the control means may initialize the estimated amount of accumulation of the sulfur compounds to 0.

When the internal combustion engine is in a high-load operation state, the temperature of the exhaust gas cleaning portion provided in the exhaust system also rises due to the high-load operation state. Then, when the temperature of the exhaust gas cleaning portion becomes high and exceeds the aforementioned temperature range, the release of the sulfur compounds accumulated in the exhaust gas cleaning portion is completed in a short time, and therefore it is estimated that most of the sulfur compounds accumulated in the exhaust gas cleaning portion has been released.

Hence, in the foregoing configuration, when the temperature of the exhaust gas cleaning portion is above the temperature range due to high-load operation of the internal combustion engine, it is determined that the sulfur compounds have already been released from the exhaust gas cleaning portion, and then the estimated amount of accumulation is initialized. Therefore, the temperature-raising control for the exhaust gas cleaning portion based on the estimated amount of accumulation is not executed, so that useless consumption of the fuel or the like for the temperature raise is avoided. This further promotes saving of fuel, and reduces the computation load or the like applied on the control means due to the recovery process for the exhaust gas cleaning portion.

In the exhaust gas control apparatus according to the foregoing aspect, when the temperature of the exhaust gas cleaning portion is higher than or equal to 600°C, the control means may determine that the temperature of the exhaust gas cleaning portion is above the temperature range, and may initialize the estimated amount of accumulation of the sulfur compounds to 0.

In the characteristic of release of the sulfur compounds, when the temperature of the exhaust gas cleaning portion in which the sulfur compounds are accumulated becomes higher than or equal to about 600°C, the amount of release of the sulfur compounds sharply increases, and the sulfur compounds are substantially removed from the exhaust gas cleaning portion without depending on the temperature-raised period in which the exhaust gas cleaning portion is in the temperature-raised state. Hence, in the foregoing configuration, when the temperature of the exhaust gas cleaning portion is higher than or equal to about 600°C, it is determined that all the sulfur compounds accumulated in the exhaust gas cleaning portion have been released, and the estimated amount of accumulation is initialized. Thus, the estimated amount of accumulation is initialized on the condition that a temperature condition, which makes it possible to estimate that the amount of accumulation of the sulfur compounds in the exhaust gas cleaning portion has reliably become zero, is fulfilled. Accordingly, it is possible to enhance the estimation accuracy in executing the temperature-raising control through estimation of the amount of accumulation of the sulfur compounds.

In general, the temperature needed for removal of the particulate components from the exhaust gas cleaning portion is higher than the temperature needed for release of the sulfur compounds, and tends to be above the aforementioned temperature range. Therefore, in the foregoing configuration, the oxidation mode and the sulfur release mode are provided as modes for removing the particulate components and releasing the sulfur compounds. In the case where the sulfur release mode is executed prior to the oxidation mode that is executed by raising the temperature of the exhaust gas cleaning portion beyond the aforementioned temperature range, the sulfur compounds have already been released from the exhaust gas cleaning portion at the time of oxidation of the particulate components, and thus, the generation of white smoke due to release of the sulfur compounds is not caused. This makes it possible to accurately restrain the generation of white smoke while maintaining the function of recovering the exhaust gas cleaning portion through removal and release of the particulate components and the sulfur compounds that are deposited and accumulated in the exhaust gas cleaning portion.

In the exhaust gas control apparatus according to the foregoing aspect, the control means may switch from the sulfur release mode to the oxidation mode by further raising the temperature of the exhaust gas cleaning portion after the control means keeps the temperature of the exhaust gas cleaning portion in the temperature range for a given period in the sulfur release mode.

In the foregoing configuration, in the sulfur release mode, the temperature of the exhaust gas cleaning portion is kept in the aforementioned temperature range for a given period. Thus, the sulfur compounds accumulated in the exhaust gas cleaning portion are gradually released from the exhaust gas cleaning portion. Then, when the given period of time, which is, for example, in accordance with the amount of accumulation of the sulfur compounds, elapses, the mode is switched from the sulfur release mode to the oxidation mode by further raising the temperature of the exhaust gas cleaning portion. Hence, it is possible to remove the particulate components from the exhaust gas cleaning portion uninterruptedly following the release of the sulfur compounds merely by further raising the temperature of the exhaust gas cleaning portion which has already been raised for the release of the sulfur compounds. Thus, the release of the sulfur compounds and the removal of the particulate components can be performed in a step-by-step manner and successively, so that the recovery process for the exhaust gas cleaning portion can be smoothly carried out.

In the exhaust gas control apparatus according to the invention, the control means may switch from the sulfur release mode to the oxidation mode after gradually raising the temperature of the exhaust gas cleaning portion from a lower limit of the temperature range to an upper limit of the temperature range in the sulfur release mode.

According to the invention, in the sulfur release mode, the temperature of the exhaust gas cleaning portion is gradually raised from the lower limit to the upper limit of the aforementioned temperature range. During this period, the amount of accumulation of the sulfur compounds in the exhaust gas cleaning portion gradually decreases. Furthermore, as the temperature of the exhaust gas cleaning portion rises, the release of the sulfur compounds is accelerated in a stepwise manner. However, since the amount of accumulation of the sulfur compounds decreases over time, the amount of release of the sulfur compounds from the exhaust gas cleaning portion is kept at a substantially constant amount, and therefore the generation of smoke of the sulfur compounds is restrained. Furthermore, since the release of the sulfur compounds is accelerated in the range in which the generation of white smoke is restrained, the time needed for the release of the sulfur compounds can be shortened. Then, in the course of gradual temperature rise of the exhaust gas cleaning portion, the release of the sulfur compounds is completed, and after the temperature of the exhaust gas cleaning portion exceeds the upper-limit value of the foregoing temperature range, the mode is switched to the oxidation mode merely by slightly raising the temperature of the exhaust gas cleaning portion that has been gradually raised. Therefore, while the sulfur release mode and the oxidation mode are executed in a step-by-step manner, the switching from the sulfur release mode to the oxidation mode is smoothly performed and smooth removal of the particulate components deposited in the exhaust gas cleaning portion is promoted.

In the exhaust gas control apparatus according to the foregoing aspect, when the amount of accumulation of the sulfur compounds reaches the release-demanding amount before the amount of deposition of the particulate components in the exhaust gas cleaning portion reaches the removal-demanding amount, the control means may execute, as an exceptional process in the sulfur release mode, a process of releasing the sulfur compounds accumulated in the exhaust gas cleaning portion through the temperature-raising control for the exhaust gas cleaning portion.

According to the invention, when the amount of accumulation of the sulfur compounds reaches the release-demanding amount before the amount of deposition of the particulate components reaches the removal-demanding amount, , the temperature-raising control for the exhaust gas cleaning portion is executed so as to release the sulfur compounds by giving priority to the release of the sulfur components over the removal of the particulate components. Therefore, while the two modes, that is, the oxidation mode and the sulfur release mode are provided in order to maintain the functions of the exhaust gas cleaning portion, the sulfur compounds are released from the exhaust gas cleaning portion without fulfillment of the execution condition for the oxidation mode, if it becomes necessary to release the sulfur compounds. This avoids the situation where the sulfur compounds are excessively accumulated in the exhaust gas cleaning portion. Thus, it is possible to more accurately maintain the functions of the exhaust gas cleaning portion.

In the exhaust gas control apparatus according to the invention, the control means estimates the amount of accumulation of the sulfur compounds in the exhaust gas cleaning portion, preferably on the basis of an amount of fuel consumed in the internal combustion engine.

The amount of discharge of the sulfur compounds from the internal combustion engine to the exhaust system is correlated with the amount of fuel consumed in the internal combustion engine. As the total amount of fuel consumed in the internal combustion engine increases, the amount of the sulfur compounds accumulated in the exhaust gas cleaning portion increases. Accordingly, in the foregoing configuration, by estimating the amount of accumulation of the sulfur compounds on the basis of the amount of fuel consumed in the internal combustion engine, it is possible to accurately estimate the amount of accumulation of the sulfur compounds, so that the temperature-raising control for the exhaust gas cleaning portion is accurately executed based on the estimated amount of accumulation of the sulfur compounds.

In the exhaust gas control apparatus according to the foregoing aspect, when the sulfur compounds are released, the control means may set a temperature-raised period in which the temperature of the exhaust gas cleaning portion is kept in the temperature range, according to the estimated amount of accumulation of the sulfur compounds.

When the temperature of the exhaust gas cleaning portion is raised to be in the foregoing temperature range at the occasion of release of the sulfur compounds, the total amount of release of the sulfur compounds increases in correlation with the temperature-raised period in which the exhaust gas cleaning portion is in the temperature-raised state. Hence, if the exhaust gas cleaning portion is in the temperature-raised state for a period needed for the release of the sulfur compounds accumulated in the exhaust gas cleaning portion, it is possible to release most of the sulfur compounds accumulated in the exhaust gas cleaning portion. Therefore, in the foregoing configuration, when the sulfur compounds are released, the temperature-raised period is set according to the estimated amount of accumulation of the sulfur compounds. Thus, it is possible to set the temperature-raised period that is necessary for or necessary and sufficient for releasing most of the sulfur compounds accumulated in the exhaust gas cleaning portion. Thus, it is possible to reliably remove the sulfur compounds accumulated in the exhaust gas cleaning portion, and to further save the fuel or the like needed for raising the temperature of the exhaust gas cleaning portion.

In the exhaust gas control apparatus according to the foregoing aspect, the internal combustion engine may be a diesel engine, and the exhaust gas cleaning portion may include a diesel particulate filter and a diesel oxidation catalyst.

Generally, in diesel engines, the amount of the particulate components generated due to combustion of fuel is large, and therefore the diesel engines are provided with a diesel particulate filter (DPF) so as to restrain emission of the particulate components into the atmosphere, in most cases. As for such a DPF, the amount of the particulate components deposited in the DPF due to combustion of fuel is large, and therefore there is a need to accurately execute the recovery process for the DPF so as to maintain the exhaust gas cleaning function of the DPF. Furthermore, in the DPF, sulfur compounds contained in exhaust gas are accumulated, so that it is necessary to periodically remove the sulfur compounds from the DPF for the purpose of maintaining the functions of the DPF. Likewise, in a diesel oxidation catalyst provided in the exhaust system together with the DPF, too, the sulfur compounds are accumulated, so that it is necessary to periodically release the sulfur compounds from the catalyst for the purpose of maintaining the catalytic function of the diesel oxidation catalyst.

In the foregoing configuration, in an arrangement in which the DPF and the diesel oxidation catalyst are provided in the exhaust system, it is possible to accurately restrain the generation of white smoke of the sulfur compounds while maintaining the exhaust gas cleaning functions by recovering the DPF and the diesel oxidation catalyst.

A second aspect of the invention relates to a control method for an exhaust gas control apparatus for an internal combustion engine, the exhaust gas control apparatus including an exhaust gas cleaning portion which is disposed in an exhaust system of the internal combustion engine mounted in a vehicle, and which collects particulate components contained in exhaust gas, and in which sulfur compounds contained in the exhaust gas are accumulated. The control method includes estimating an amount of deposition of the particulate components and an amount of accumulation of the sulfur compounds accumulated in the exhaust gas cleaning portion; determining whether the estimated amount of accumulation of the sulfur compounds has reached a release-demanding amount, with an oxidation mode and a sulfur release mode being provided as modes in which the temperature of the exhaust gas cleaning portion is controlled to be raised by adding a reducing agent or by using an electric heater or a glow plug. In the oxidation mode, the particulate components deposited in the exhaust gas cleaning portion are removed from the exhaust gas cleaning portion by oxidizing the particulate components on a condition that the estimated amount of deposition of the particulate components in the exhaust gas cleaning portion has reached a removal-demanding amount of the particulate components. In the sulfur release mode, the sulfur compounds accumulated in the exhaust gas cleaning portion are released from the exhaust gas cleaning portion by a temperature-raising control, wherein a temperature of the exhaust gas cleaning portion is gradually raised from about 500°C to about 550°C, a temperature range in which the generation of white smoke of the sulfur compounds in atmosphere is restrained, when it is determined that the estimated amount of accumulation of the sulfur compounds has reached the release-demanding amount and when the condition for the oxidation mode is fulfilled. Whereas, the sulfur release mode is executed prior to the execution of the oxidation mode.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a diagram schematically showing an overall configuration of a diesel engine provided with an exhaust gas control apparatus for an internal combustion engine in accordance with a first embodiment,which is not part of the invention;
FIG. 2 is a graph showing the amount of sulfur compounds released per unit time in relation to the temperature of a diesel oxidation catalyst;
FIG. 3A is a diagram showing examples of a decrease in the amount of accumulation of the sulfur compounds when the temperature of the diesel oxidation catalyst increases, and FIG. 3B is a diagram showing an example of transition of the amount of the sulfur compounds released from the diesel oxidation catalyst;
FIG. 4A is a diagram showing an example of transition of the temperature of an exhaust gas cleaning portion that is subjected to a temperature-raising control by the exhaust gas control apparatus of the embodiment, and FIG. 4B is a diagram showing an example of transition of the concentration of the sulfur compounds discharged from the exhaust gas cleaning portion under the temperature-raising control;
FIG. 5A is a diagram showing an example of transition of the temperature of the exhaust gas cleaning portion that is subjected to a temperature-raising control by a related-art exhaust gas control apparatus, and FIG. 5B is an example of transition of the concentration of the sulfur compounds discharged from the exhaust gas cleaning portion under the temperature-raising control;
FIG. 6 is a flowchart showing an example of a recovery procedure executed for the exhaust gas cleaning portion by the exhaust gas control apparatus;
FIG. 7 is a flowchart showing an example of the recovery procedure for the exhaust gas cleaning portion executed by an exhaust gas control apparatus for an internal combustion engine in accordance with a second embodiment, which is not part of the invention; and
FIG. 8 is a diagram showing an example of transition of the temperature of the exhaust gas cleaning portion that is subjected to a temperature-raising control by an exhaust gas control apparatus for an internal combustion engine in accordance with a third embodiment of the invention.

### DETAILED DESCRIPTION OF EMBODIMENTS

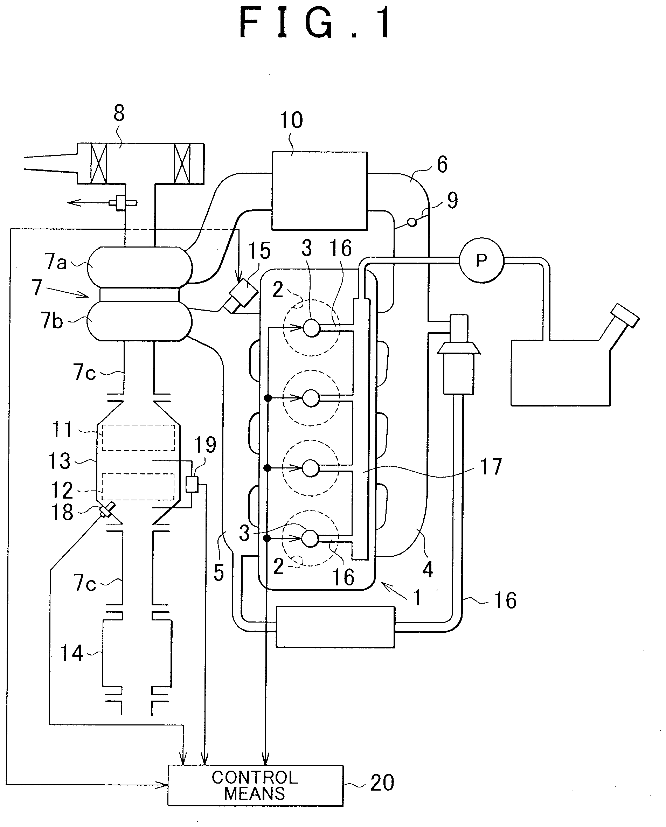

(FIRST EMBODIMENT) It is hereby pointed out that the process of this first embodiment is not part of the invention while the basic configuration as described, applies to all further embodiments. An exhaust gas control apparatus for an internal combustion engine in accordance with a first embodiment will be described hereinafter with reference to FIGS. 1 to 6. The exhaust gas control apparatus of this embodiment is an apparatus mounted in a vehicle, such as automobile or the like, which employs a diesel engine as a drive source.

As shown in FIG. 1, a diesel engine 1 includes a plurality of combustion chambers 2 that correspond to the combustion chambers of the individual cylinders of the engine. Each combustion chamber 2 is provided with an electronically controlled fuel injection valve 3 for injecting fuel into the combustion chamber 2.

The diesel engine 1 includes an intake manifold 4 that takes air into the diesel engine 1, and an exhaust manifold 5 that discharges the air taken in through the intake manifold 4, to an outside of the diesel engine 1.

The intake manifold 4 is connected to an outlet opening of a compressor 7a of an exhaust turbocharger 7 via an intake duct 6 that reduces the intake gas resistance. An inlet opening of the compressor 7a is connected to an air cleaner 8.

Within the intake duct 6, there is disposed a throttle valve 9 that is driven by a stepping motor. Around the intake duct 6, there is disposed an intake gas cooler device (intercooler) 10 for cooling intake air that flows in the intake duct 6. Engine coolant is led into the intake gas cooler device 10, so that the engine coolant cools intake air.

An exhaust manifold 5 is connected to an inlet opening of an exhaust turbine 7b of the exhaust turbocharger 7. An exhaust pipe 7c connected to an outlet opening of the exhaust turbine 7b is provided with a casing 13 that contains a diesel oxidation catalyst 11 and a particulate filter (DPF) 12 that constitute the aforementioned exhaust gas cleaning portion. The outlet opening of the casing 13 is connected, via the exhaust pipe 7c, to a muffler 14 that has a silencing function and the like.

The diesel oxidation catalyst 11 contained in the casing 13 converts hydrocarbon (HC) and carbon monoxide (CO) contained in exhaust gas into water (H₂O) and carbon dioxide (CO₂) through oxidation of the hydrocarbon (HC) and carbon monoxide (CO). The fuel and the lubricating oil used by the diesel engine 1 contain sulfur, so that sulfur compounds (SOx) are generated from sulfur as the fuel is burned. The thus-generated sulfur compounds are discharged together with exhaust gas into the exhaust pipe 7c, and are accumulated in the diesel oxidation catalyst 11 and the DPF 12. On another hand, if the amount of the sulfur compounds accumulated in the diesel oxidation catalyst 11 and the DPF 12 increases, the catalytic function of the diesel oxidation catalyst 11 and the collection function of the DPF 12 for collecting the particulate components decline.

. Therefore, in this embodiment, when the amount of accumulation of the sulfur compounds accumulated in the diesel oxidation catalyst 11 and the DPF 12 exceeds a predetermined amount, a recovery process for the diesel oxidation catalyst 11 and the DPF 12 is executed in order to maintain the functions of the diesel oxidation catalyst 11 and the DPF 12. In this embodiment, the diesel oxidation catalyst 11 and the DPF 12 constitute the exhaust gas cleaning portion. Since the diesel oxidation catalyst 11 and the DPF 12 are provided adjacent to each other in the exhaust system, the temperatures of the catalyst 11 and the filter 12 change in a similar manner.

The DPF 12 is formed from, for example, a porous material such as cordierite. Particulate components that are generated due to combustion of fuel in the diesel engine 1 and that are discharged from the exhaust manifold 5 together with exhaust gas are collected by the DPF 12 when the exhaust gas passes through the DPF 12. When the amount of deposition of particulate components collected by the DPF 12 becomes large, pressure loss occurs in the DPF 12. Therefore, when the amount of deposition of the particulate components in the DPF 12 increases, pressure loss results in a pressure difference between an upstream side of the DPF 12 and a downstream side of the DPF 12. If the pressure difference increases, that is, if the amount of deposition of the particulate components increases, the pressure loss in the DPF 12 impedes the flow of exhaust gas, so that fuel efficiency or the like deteriorates. Therefore, in this embodiment, when the amount of deposition of the particulate components in the DPF 12 becomes equal to or larger than a predetermined amount, the recovery process in which the particulate components deposited in the DPF 12 are removed is executed in order to restrain the deterioration of fuel efficiency or the like.

Furthermore, a temperature sensor 18 for detecting the temperature of exhaust gas that passes through the DPF 12 is attached at a position downstream of the DPF 12. Still further, the casing 13 is provided with a differential pressure sensor 19 for detecting the differential pressure between the exhaust upstream side and the exhaust downstream side of the DPF 12. Output signals of the temperature sensor 18 and the differential pressure sensor 19 are input to control means 20 for executing the recovery process for the diesel oxidation catalyst 11 and the DPF 12 by raising the temperatures of the catalyst 11 and the DPF 12. The control means 20 is electrically connected to the fuel injection valves 3 and a fuel addition device 15 that is provided at an outlet opening of an aggregated portion of the exhaust manifold 5 so as to add an additive agent, for example, fuel or the like, to exhaust gas that flows in the exhaust manifold 5. Furthermore, the control means 20 is also electrically connected to the stepping motor for driving the throttle valve 9.

The fuel injection valves 3 are connected to a fuel reservoir, that is, a so-called common rail 17, through fuel supply pipes 16. The common rail 17 is supplied with fuel from a fuel pump P of an electronic control type which is capable of varying the amount of discharge, and the fuel supplied into the common rail 17 is supplied to the individual fuel injection valves 3 through the corresponding fuel supply pipes 16.

The control means 20 calculates the amount of consumption of fuel in the diesel engine 1, that is, the amount of fuel burned in the diesel engine 1, on the basis of signals input from the fuel injection valves 3. Furthermore, the control means 20 calculates the amount of generation of the sulfur compounds generated in correlation with the amount of consumption of fuel, and estimates the amount of accumulation of the sulfur compounds accumulated in the diesel oxidation catalyst 11 and the DPF 12 on the basis of the calculated amount of generation of the sulfur compounds. On the basis of the estimated value, the control means 20 monitors the amount of accumulation of the sulfur compounds in the diesel oxidation catalyst 11 and the DPF 12.

In this embodiment, if the estimated amount of accumulation of the sulfur compounds exceeds a predetermined release-demanding amount, the control means 20 executes the recovery process for the diesel oxidation catalyst 11 and the DPF 12 through the temperature-raising control for the diesel oxidation catalyst 11 and the DPF 12.

The temperature-raising control for the diesel oxidation catalyst 11 and the DPF 12 is executed, for example, by adding fuel into the casing 13 provided on the exhaust pipe 7c through the fuel injection into the exhaust system performed by the fuel addition device 15, the post-injection performed by the fuel injection valves 3, etc.

Furthermore, the release-demanding amount is set to, for example, the largest value in a range in which the oxidative function of the diesel oxidation catalyst 11 that oxidizes hydrocarbon (HC) and carbon monoxide (CO) can be maintained. Thus, by executing the recovery process for the diesel oxidation catalyst 11 and the DPF 12 after the amount of accumulation of the sulfur compounds in the diesel oxidation catalyst 11 and the DPF 12 reaches the release-demanding amount, it is possible to prevent the melt loss and the like of the diesel oxidation catalyst 11 and the DPF 12 caused by excessive temperature rise. Furthermore, this reduces the number of times (or the frequency) of execution of the recovery process for the diesel oxidation catalyst 11 and the DPF 12 which consume temperature-raising energy source needed for raising the temperatures of the diesel oxidation catalyst 11 and the DPF 12, such as fuel, so that fuel efficiency can be improved.

Furthermore, the control means 20 estimates the amount of deposition of the particulate components in the DPF 12, on the basis of the signal input from the differential pressure sensor 19. Then, if the estimated amount of deposition of the particulate components exceeds a predetermined removal-demanding amount, the control means 20 executes the temperature-raising control for the DPF 12 until the temperature of the DPF 12 reaches the combustion temperature of the particulate components. Due to this control, the recovery process for the DPF 12, in which the particulate components deposited in the DPF 12 are burned and removed, is carried out, and therefore, for example, the occurrence of the clogging of the DPF 12 caused by deposition of the particulate components can be restrained.

The temperature-raising control for the DPF 12 is also carried out by, for example, adding fuel into the casing 13 provided on the exhaust pipe 7c through the fuel injection into the exhaust system by the fuel addition device 15, the post-injection by the fuel injection valves 3, etc.

The removal-demanding amount is set to, for example, the largest value in a range in which even if the DPF 12 is heated to the combustion temperature of the particulate components, the particulate components deposited in the DPF 12 do not burn immediately and therefore the DPF 12 is not overheated. Thus, by executing the recovery process for the DPF 12 after the amount of deposition of the particulate components in the DPF 12 reaches the removal-demanding amount, the melt loss and the like of the DPF 12 caused by the overheating or excessive temperature rise of the DPF 12 can be prevented. At the same time, this reduces the number of times (or the frequency) of execution of the recovery process for the DPF 12 that consumes temperature-raising energy source, such as fuel. Therefore, the fuel efficiency can be improved.

Thus, in the diesel engine 1, the exhaust gas cleaning functions of the diesel oxidation catalyst 11 and the DPF 12 are maintained through the recovery process for the diesel oxidation catalyst 11 and the DPF 12. Thus, the exhaust gas generated due to combustion of fuel is emitted into the atmosphere through the muffler 14 after being cleaned when the exhaust gas passes through the diesel oxidation catalyst 11 and the DPF 12.

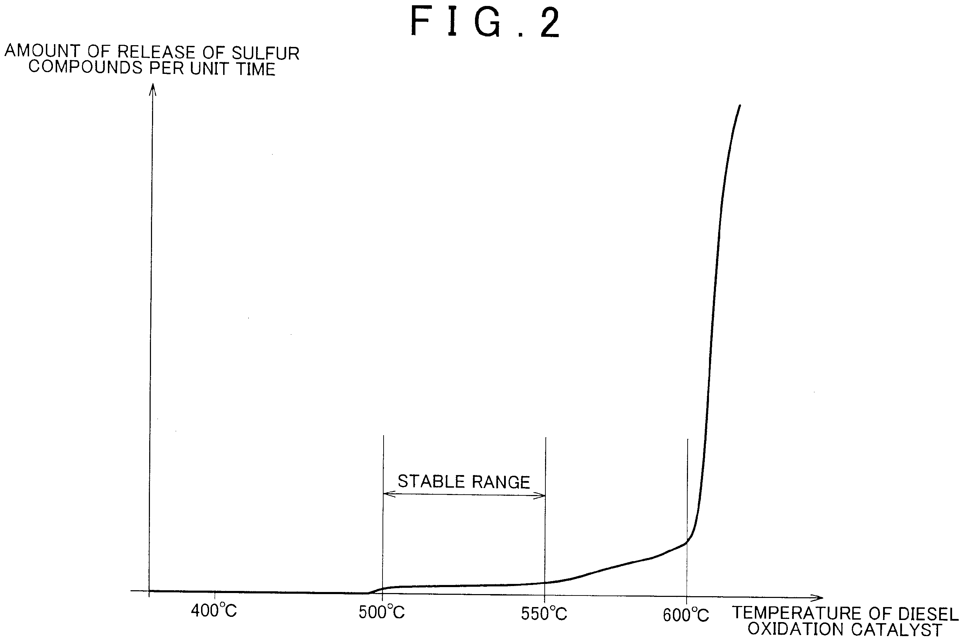

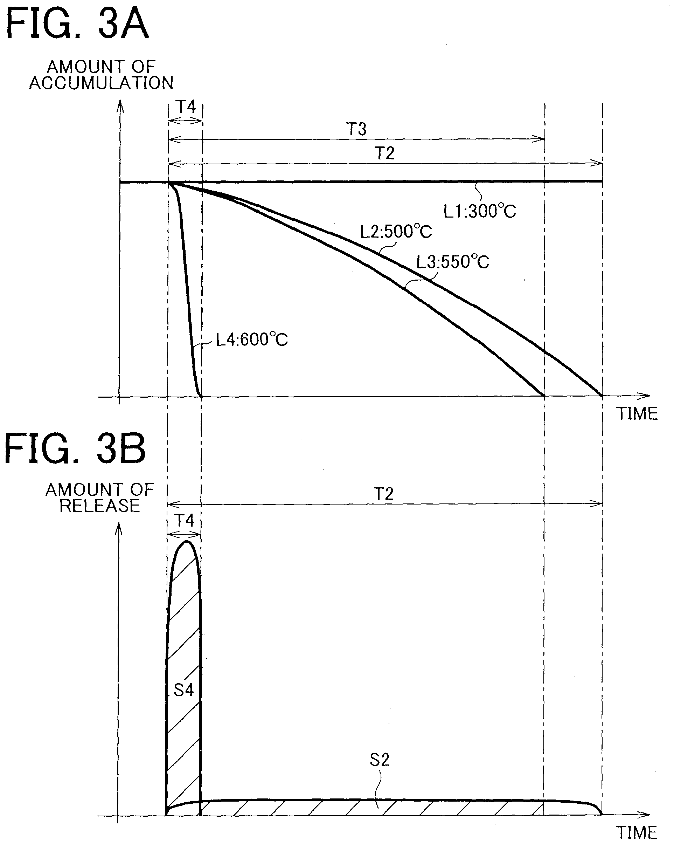

The characteristics of the release of the sulfur compounds from the diesel oxidation catalyst 11 and the DPF 12 will be described below with reference to FIG. 2 and FIGS. 3A and 3B. FIG. 2 shows a relation between the amount of release of the sulfur compounds accumulated in the diesel oxidation catalyst 11 and the DPF 12 per unit time and the temperature of, for example, the diesel oxidation catalyst 11. As shown in FIG. 2, when the temperature of the diesel oxidation catalyst 11 is, for example, less than about 500°C, sulfur compounds are not released from the diesel oxidation catalyst 11.

When the temperature of the diesel oxidation catalyst 11 is in the range of about 500°C to 550°C, a characteristic in which the sulfur compounds are stably released in a low concentration state is exhibited. However, when the temperature of the diesel oxidation catalyst 11 rises beyond the range of about 500°C to 550°C, and particularly when the temperature thereof becomes higher than or equal to about 600°C, a characteristic in which the amount of release of the sulfur compounds per unit time sharply increases is exhibited. Hence, if the temperature of the diesel oxidation catalyst 11 is raised to or above about 600°C, the sulfur compounds accumulated in the diesel oxidation catalyst 11 are released all at once. It is to be noted that the temperature of about 600°C, at which the aforementioned characteristic is exhibited, is also a temperature needed to burn the particulate components deposited in the DPF 12 that is provided together with the diesel oxidation catalyst 11 in the casing 13.

FIG. 3A shows examples of transition of the amount of accumulation of the sulfur compounds at different temperatures of the diesel oxidation catalyst 11. As shown in FIG. 3A, the amount of the sulfur compounds deposited in the diesel oxidation catalyst 11 decreases in correlation with the temperature of the diesel oxidation catalyst 11.

In FIG. 3A, an example of transition of the amount of accumulation of the sulfur compounds occurring when the temperature of the diesel oxidation catalyst 11 is, for example, about 300°C, is shown as a first transition example L1. Under the temperature condition in the first transition example L1, the amount of accumulation of the sulfur compounds is substantially maintained.

An example of transition of the amount of accumulation of the sulfur compounds occurring when the temperature of the diesel oxidation catalyst 11 is about 500°C is shown as a second transition example L2. Under the temperature condition in the second transition example L2, the amount of accumulation of the sulfur compounds gradually decreases (period T2). An example of transition of the amount of accumulation of the sulfur compounds occurring when the temperature of the diesel oxidation catalyst 11 is about 550°C is shown as a third transition example L3. Under the temperature condition in the third transition example L3 as well, the amount of accumulation of the sulfur compounds gradually decreases (period T3).

An example of transition of the amount of accumulation of the sulfur compounds occurring when the temperature of the diesel oxidation catalyst 11 is about 600°C is shown as a fourth transition example L4. Under the temperature condition in the fourth transition example L4, the amount of accumulation of the sulfur compounds sharply reduces in a short period of time (period T4).

FIG. 3B corresponding to FIG. 3A shows the transition of the amount of release of the sulfur compounds from the diesel oxidation catalyst 11. As shown in FIG. 3B, when the temperature of the diesel oxidation catalyst 11 is, for example, about 500°C, the sulfur compounds in a low concentration are released over the period T2. Thus, the entire amount (S2) of the sulfur compounds accumulated in the diesel oxidation catalyst 11 is gradually released.

In contrast, when the temperature of the diesel oxidation catalyst 11 is about 600°C, the entire amount (S4 = S2) of the sulfur compounds accumulated in the diesel oxidation catalyst 11 is released all at once in a period T4 (T4 << T2). As a result, when the temperature of the diesel oxidation catalyst 11 is higher than or equal to about 600°C, the sulfur compounds in a high concentration state are released from the diesel oxidation catalyst 11, which may lead to generation of white smoke in the atmosphere.

It is to be noted that the above-described characteristic of release of the sulfur compounds from the diesel oxidation catalyst 11 is substantially the same as the characteristic of release of the sulfur compounds from the DPF 12. Thus, in this embodiment, the recovery process for the diesel oxidation catalyst 11 and the DPF 12 is executed while restraining the generation of white smoke of sulfur compounds, by executing different controls of raising the temperatures of the diesel oxidation catalyst 11 and the DPF 12 on the basis of the characteristics of release of the sulfur compounds.

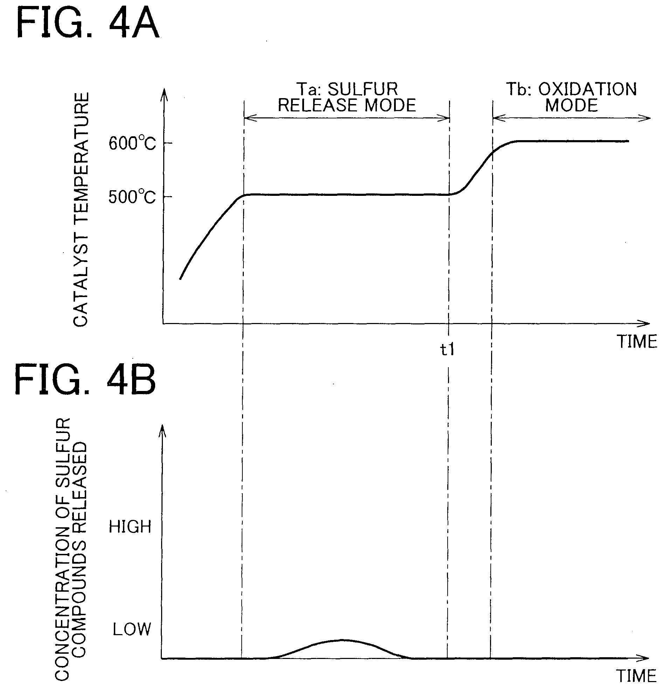

Next, on the foregoing prerequisite, operation and effects of the exhaust gas control apparatus for an internal combustion engine of the embodiment will be described with reference to FIGS. 4A and 4B. As shown in FIG. 4A, the control means 20 in this embodiment executes the recovery process for the diesel oxidation catalyst 11 and the DPF 12, for example, when the amount of accumulation of the sulfur compounds in the diesel oxidation catalyst 11 and the DPF 12 reaches the release-demanding amount and the amount of deposition of the particulate components in the DPF 12 reaches the removal-demanding amount.

When the recovery process is executed, firstly, the temperature-raising control of raising the temperatures of the diesel oxidation catalyst 11 and the DPF 12 is executed so that the temperatures of the diesel oxidation catalyst 11 and the DPF 12 are raised to about 500°C. Then, the temperatures of the diesel oxidation catalyst 11 and the DPF 12 are maintained at about 500°C for a given period Ta. Thus, a sulfur release mode, in which only the sulfur compounds accumulated in the diesel oxidation catalyst 11 and the DPF 12 are released, is executed prior to removal of the particulate components accumulated in the DPF 12.

In this sulfur release mode, for example, the temperature of exhaust gas at a position downstream of the diesel oxidation catalyst 11 and the DPF 12 in the direction of flow of exhaust gas is detected by the temperature sensor 18, and the temperatures of the diesel oxidation catalyst 11 and the DPF 12 are estimated on the basis of the output of the temperature sensor 18. Then, the temperature-raising control for the diesel oxidation catalyst 11 and the DPF 12 is executed so that the estimated temperatures of the diesel oxidation catalyst 11 and the DPF 12 are maintained at about 500°C.

The control means 20 raises the temperatures of the diesel oxidation catalyst 11 and the DPF 12, for example, by the so-called post injection, that is, by injecting a small amount of fuel into the combustion chamber 2 of the diesel engine 1 so that the fuel is not burned and is directly discharged from the combustion chamber 2, after fuel is injected into the combustion chamber 2 for the purpose of driving the diesel engine 1. The control means 20 also adds fuel to exhaust gas upstream of the diesel oxidation catalyst 11, for example, by using the fuel addition device 15. As a result, the fuel added to exhaust gas is supplied to the diesel oxidation catalyst 11 and the DPF 12, and then the fuel is burned in the diesel oxidation catalyst 11 or in the DPF 12, so that the diesel oxidation catalyst 11 and the DPF 12 are heated. Thus, the DPF 12, which is provided together with the diesel oxidation catalyst 11 within the casing 13, is also heated.

In this case, the temperatures of the diesel oxidation catalyst 11 and the DPF 12 are maintained at about 500°C. Therefore, the concentration of the sulfur compounds released from the diesel oxidation catalyst 11 and the DPF 12 is reduced as shown in FIG. 4B, so that the concentration of the sulfur compounds emitted into the atmosphere can be reduced and therefore generation of white smoke of the sulfur compounds is restrained.

It is to be noted that in this embodiment, the execution time of the sulfur release mode, that is, the temperature-raised period Ta, in which the diesel oxidation catalyst 11 and the DPF 12 are in the temperature-raised state, is determined according to the amount of accumulation of the sulfur compounds in the diesel oxidation catalyst 11 and the DPF 12. Furthermore, the temperature-raised period Ta is set to the shortest period in a range of periods in which all the sulfur compounds accumulated in the diesel oxidation catalyst 11 and the DPF 12 are released. The amount of accumulation of the sulfur compounds in the diesel oxidation catalyst 11 and the DPF 12, which is used for setting the temperature-raised period Ta, is calculated, for example, on the basis of the amount of consumption of fuel in the diesel engine 1, that is, the amount of fuel supplied into the diesel engine 1 by the fuel injection valves 3 and consumed in the diesel engine 1.

Then, as shown in FIG. 4A, after the temperature-raised period Ta determined as described above elapses, that is, after the release of the sulfur compounds is completed by the temperature-raising control for the diesel oxidation catalyst 11 and the DPF 12, the amount of fuel added to the diesel oxidation catalyst 11 and the DPF 12, for example, by the aforementioned post-injection or by the fuel addition device 15, that is, the amount of addition of fuel, is further increased. Due to this, after timing t1, the temperatures of the diesel oxidation catalyst 11 and the DPF 12 are raised from about 500°C to, for example, about 600°C. Thus, an oxidation mode for removing the particulate components deposited in the DPF 12 is executed, so that the particulate components deposited in the DPF 12 are removed by burning and oxidizing the particulate components (period Tb). That is, in the oxidation mode, the temperatures of the diesel oxidation catalyst 11 and the DPF 12 are kept at about 600°C.

At this time, the release of the sulfur compounds accumulated in the diesel oxidation catalyst 11 and the DPF 12 has been completed due to the execution of the sulfur release mode prior to execution of the oxidation mode. Therefore, the concentration of the sulfur compounds released from the diesel oxidation catalyst 11 and the DPF 12 is about 0% as shown in FIG. 4B. Thus, the release of sulfur compounds in the high concentration is restrained and therefore generation of white smoke of the sulfur compounds in the atmosphere is restrained while the DPF 12 is heated to a temperature at which the particulate components are removed.

Then, when it is estimated that the removal of the particulate components is completed, for example, because the differential pressure between the exhaust upstream side and the exhaust downstream side of the DPF 12 detected by the differential pressure sensor 19 has become less than or equal to a predetermined value, the addition of fuel to the exhaust system via the fuel injection valves 3 or the fuel addition device 15 is ended, and thus the oxidation mode is ended. In this manner, the recovery process for the diesel oxidation catalyst 11 and the DPF 12 is ended.

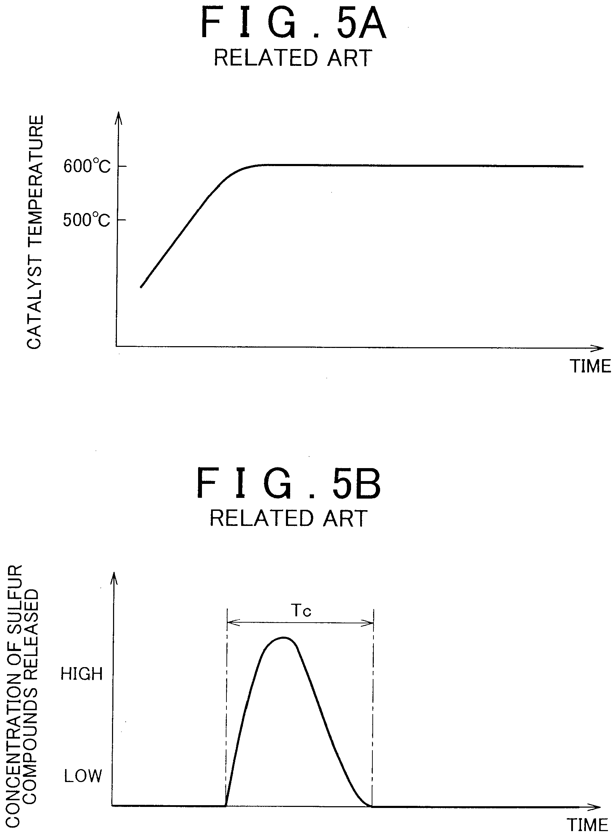

On the other hand, as shown in FIG. 5A, in the related-art exhaust gas control apparatus for an internal combustion engine, the temperatures of the diesel oxidation catalyst 11 and the DPF 12 are raised to a temperature of about 600°C that is needed to remove the particulate components, without taking into account the characteristics of release of the sulfur compounds, when the particulate components deposited in the DPF 12 are removed. As a result, the sulfur compounds in the high concentration are emitted in the form of white smoke, into the atmosphere during a period Tc shown in FIG. 5B.

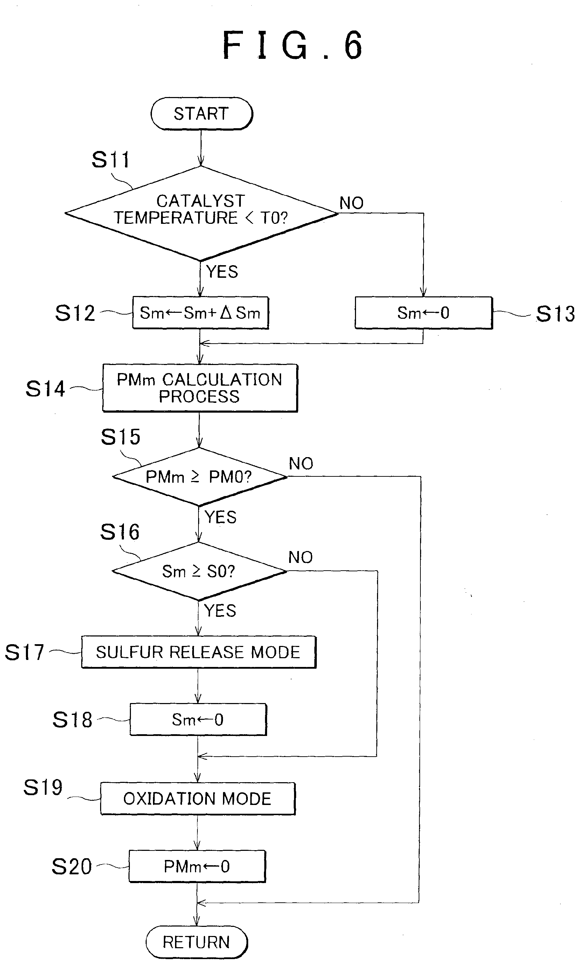

Next, an execution procedure of the sulfur release mode and the oxidation mode executed by the control means 20 of this embodiment will be described with reference to FIG. 6. As shown in FIG. 6, after operation of the diesel engine 1 is started, it is determined in step S11 whether the temperatures of the diesel oxidation catalyst 11 and the DPF 12 are higher than or equal to, for example, a temperature T0 (of about 600°C) that exceeds the upper-limit value of the temperature range of 500°C to 550°C in which the generation of white smoke is restrained. That is, it is determined whether the temperatures of the diesel oxidation catalyst 11 and the DPF 12 have been raised by, for example, exhaust gas discharged from the diesel engine 1, due to high-load operation or the like of the diesel engine 1.

Then, if the temperatures of the diesel oxidation catalyst 11 and the DPF 12 are higher than or equal to about 600°C (NO in step S11), it is determined that the release of the sulfur compounds accumulated in the diesel oxidation catalyst 11 and the DPF 12 has already been completed, and an estimated value Sm of the amount of accumulation of the sulfur compounds is initialized to "0" (step S13).

On the other hand, if the temperatures of the diesel oxidation catalyst 11 and the DPF 12 are less than about 600°C (YES in step S11), a value ΔSm is added to the estimated value Sm of the amount of accumulation of the sulfur compounds according to the amount of fuel consumed in the diesel engine 1 (step S12).

After that, an estimated value PMm of the amount of deposition of the particulate components in the DPF 12 is calculated on the basis of, for example, a detection result obtained by the differential pressure sensor 19 (step S14). Subsequently, it is determined whether the estimated value PMm calculated in step S14 is greater than or equal to a removal-demanding amount PM0 (step S15). If the estimated value PMm is greater than or equal to the removal-demanding amount PM0, it is then determined whether the estimated value Sm regarding the sulfur compounds is greater than or equal to a release-demanding amount S0 (step S16).

Then, if the estimated value Sm regarding the sulfur compounds is greater than or equal to the release-demanding amount S0 (YES in step S16), the sulfur release mode is executed, and then the estimated value Sm is temporarily initialized to "0", and the oxidation mode is executed by further raising the temperatures of the diesel oxidation catalyst 11 and the DPF 12 (steps S17 to S19). After the oxidation mode is executed, the estimated value PMm regarding the particulate components in the DPF 12 is initialized to "0" (step S20). The temperature-raised period in the sulfur release mode (i.e., the period in which the diesel oxidation catalyst 11 and the DPF 12 are in the temperature-raised state in the sulfur release mode) is set, for example, according to the estimated value Sm of the amount of accumulation of the sulfur compounds calculated in step S12, to the shortest period in the range of the periods in which all the sulfur compounds in the amount indicated by the estimated value Sm are released.

If in step S16 it is determined that the estimated value Sm regarding the sulfur compounds is less than the release-demanding amount S0, it is determined that release of the sulfur compounds is not necessary, and only the oxidation mode is executed, and after execution of the oxidation mode, the estimated value PMm is initialized to "0" (steps S19 and S20).

If in step S15 it is determined that the estimated value PMm regarding the particulate components is less than the removal-demanding amount PM0, neither the sulfur release mode nor the oxidation mode is executed, and steps S11 to S15 are repeated until the estimated value PMm regarding the particulate components becomes greater than or equal to the removal-demanding amount PM0.

As described above, with the exhaust gas control apparatus for an internal combustion engine in accordance with the embodiment, it is possible to achieve the following advantageous effects. (1) When the estimated value Sm of the amount of accumulation of the sulfur compounds in the diesel oxidation catalyst 11 and the DPF 12 reaches the release-demanding amount S0, the temperatures of the diesel oxidation catalyst 11 and the DPF 12 are raised by the temperature-raising control into the temperature range in which the sulfur compounds are released and generation of white smoke of the sulfur compounds in the atmosphere is restrained. Therefore, the temperature-raising control for the diesel oxidation catalyst 11 and the DPF 12 does not need to be executed until the amount of accumulation of the sulfur compounds in the diesel oxidation catalyst 11 and the DPF 12 reaches the release-demanding amount S0. This reduces the number of times that the temperatures of the diesel oxidation catalyst 11 and the DPF 12 are raised. Therefore, the amount of fuel used for raising the temperatures of the diesel oxidation catalyst 11 and the DPF 12 can be reduced. Furthermore, when the accumulated sulfur compounds are released, the temperatures of the diesel oxidation catalyst 11 and the DPF 12 are raised in the aforementioned temperature range, so that it is possible to restrain the generation of white smoke of the sulfur compounds in the atmosphere. Thus, it is possible to reduce the amount of fuel used for the temperature-raising control for the diesel oxidation catalyst 11 and the DPF 12 while restraining the generation of white smoke through the temperature-raising control for the diesel oxidation catalyst 11 and the DPF 12.
(2) The temperature-raising control for the diesel oxidation catalyst 11 and the DPF 12 is executed by taking into consideration that the characteristic of release of the sulfur compounds from the diesel oxidation catalyst 11 and the DPF 12 due to the temperature-raising control is a characteristic in which the sulfur compounds start to be released when the temperatures of the diesel oxidation catalyst 11 and the DPF 12 reach the temperature range, and during the period until the temperatures of the diesel oxidation catalyst 11 and the DPF 12 exceed the temperature range, the sulfur compounds are gradually released in the low concentration state in which the generation of white smoke of the sulfur compounds is restrained. Thus, the sulfur compounds accumulated in the diesel oxidation catalyst 11 and the DPF 12 are released at low concentration, and the generation of white smoke of the released sulfur compounds is accurately restrained.
(3) When the sulfur compounds are released, the control means 20 executes the temperature-raising control for the diesel oxidation catalyst 11 and the DPF 12 in the temperature range of 500°C to 550°C. Thus, the sulfur compounds are released under the temperature condition in which the concentration of the released sulfur compounds is stabilized, and the appropriate release of the sulfur compounds and the restraint of the generation of white smoke are both achieved in a preferable manner.
(4) In the case where the temperature-raising control for the diesel oxidation catalyst 11 and the DPF 12 is to be executed by the control means 20, when the temperatures of the diesel oxidation catalyst 11 and the DPF 12 are above the temperature range of about 500°C to about 550°C due to high-load operation of the diesel engine 1, the estimated value Sm of the amount of accumulation of the sulfur compounds is initialized to "0". Therefore, when it is estimated that the release of the sulfur compounds has been completed because the temperatures of the diesel oxidation catalyst 11 and the DPF 12 are above the temperature range, the temperature-raising control in accordance with the estimated value Sm is not executed, so that unnecessary use of fuel or the like for the temperature raise is avoided. This promotes further saving of the fuel, and reduces the computation load applied on the control means 20 due to the recovery process for the diesel oxidation catalyst 11 and the DPF 12.
(5) When the temperatures of the diesel oxidation catalyst 11 and the DPF 12 are higher than or equal to about 600°C due to the high-load operation of the diesel engine 1, it is determined that the temperatures of the diesel oxidation catalyst 11 and the DPF 12 are above the temperature range, and the estimated value Sm is initialized. Therefore, when the temperatures of the diesel oxidation catalyst 11 and the DPF 12 are higher than or equal to about 600°C, it is determined that the sulfur compounds accumulated in the diesel oxidation catalyst 11 and the DPF 12 have been entirely released, and the temperature-raising control for the diesel oxidation catalyst 11 and the DPF 12 is not executed. Thus, when executing the temperature-raising control by estimating the amount of accumulation of the sulfur compounds, the accuracy of the estimation can be increased, and it is possible to accurately execute the temperature-raising control in accordance with the result of the estimation.
(6) As the modes executed by the control means 20, two modes, that is, the oxidation mode and the sulfur release mode are provided, and the sulfur release mode is executed prior to execution of the oxidation mode. Therefore, when the oxidation mode is executed, the release of the sulfur compounds accumulated in the diesel oxidation catalyst 11 and the DPF 12 has already been completed, so that white smoke of the released sulfur compounds is not generated. Thus, it is possible to accurately restrain the generation of white smoke while removing the particulate components from the DPF 12 by executing the control of raising the temperature of the DPF 12.
(7) The control means 20 maintains the temperatures of the diesel oxidation catalyst 11 and the DPF 12 at about 500°C, which is in the foregoing temperature range, for a given period in the sulfur release mode, and then switches from the sulfur release mode to the oxidation mode by further raising the temperatures of the diesel oxidation catalyst 11 and the DPF 12. Thus, the sulfur compounds accumulated in the diesel oxidation catalyst 11 and the DPF 12 are gradually released from the diesel oxidation catalyst 11 and the DPF 12. Furthermore, this makes it possible to remove the particulate components uninterruptedly following the release of the sulfur compounds simply by further heating the DPF 12 whose temperature has already been raised for the release of the sulfur compounds. Hence, the release of the sulfur compounds and the removal of the particulate components can be performed in a step-by-step manner and successively, so that the recovery process for the diesel oxidation catalyst 11 and the DPF 12 can be smoothly carried out.
(8) The estimated value Sm of the amount of accumulation of the sulfur compounds in the diesel oxidation catalyst 11 and the DPF 12 is determined on the basis of the amount of fuel consumed in the diesel engine 1. Thus, it is possible to accurately estimate the amount of accumulation of the sulfur compounds, which correlates with the amount of fuel consumption, and it is possible to accurately execute the temperature-raising control for the diesel oxidation catalyst 11 and the DPF 12 based on the estimated amount of accumulation of the sulfur compounds.
(9) When the sulfur compounds are released, the temperature-raised period during which the temperatures of the diesel oxidation catalyst 11 and the DPF 12 are kept in the aforementioned temperature range is set according to the estimated value Sm of the amount of accumulation of the sulfur compounds. Therefore, it is possible to set the temperature-raised period that is necessary for or necessary and sufficient for releasing most of the sulfur compounds accumulated in the diesel oxidation catalyst 11 and the DPF 12. Thus, it is possible to reliably remove the sulfur compounds accumulated in the diesel oxidation catalyst 11 and the DPF 12, and to further save the fuel and the like needed for raising the temperatures of the diesel oxidation catalyst 11 and the DPF 12.
(10) The diesel engine 1 is adopted as the internal combustion engine, and the diesel oxidation catalyst 11 and the DPF 12 are adopted as the exhaust gas cleaning portion. Thus, in the configuration in which the DPF 12 and the diesel oxidation catalyst 11 are provided in the exhaust system, it is possible to accurately restrain the generation of white smoke of the sulfur compounds while maintaining the exhaust gas cleaning functions by recovering the DPF 12 and the diesel oxidation catalyst 11.

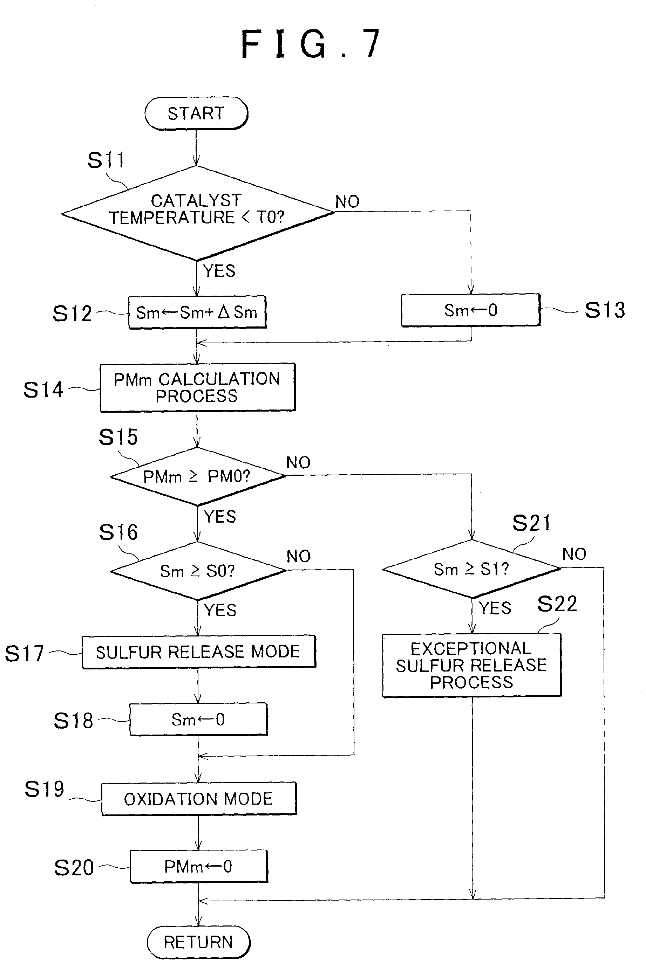

(SECOND EMBODIMENT) Next, an exhaust gas control apparatus for an internal combustion engine in accordance with a second embodiment, which is not part of the invention, will be described. Differences between the first embodiment and the second embodiment will be mainly described with reference to FIG. 7, which corresponds to FIG. 6 described above. The basic configuration of the exhaust gas control apparatus in accordance with the second embodiment is substantially the same as that of the first embodiment, and substantially the same elements as those of the first embodiment are denoted by the same reference numerals in FIG. 7, and redundant descriptions will be omitted below.

As shown in FIG. 7, in the second embodiment, if in step S15 it is determined that the estimated value PMm regarding the particulate components is less than the removal-demanding amount PM0, it is then determined in step S21 whether the estimated value Sm regarding the sulfur compounds is greater than or equal to a release-demanding amount S0.

Then, if it is determined that the estimated value Sm regarding the sulfur compounds is greater than or equal to the release-demanding amount S0 (YES in step S21), an exceptional sulfur release process that is a process in the sulfur release mode is exceptionally executed although the amount of the particulate components has not reached the removal-demanding amount PM0 (step S22). In the exceptional sulfur release process, the temperatures of the diesel oxidation catalyst 11 and the DPF 12 are kept in the temperature range of about 500°C and about 550°C in accordance with the estimated value Sm of the amount of accumulation of the sulfur compounds as in the sulfur release mode. After the temperature-raised period in accordance with the estimated value Sm elapses, the raise of the temperatures of the diesel oxidation catalyst 11 and the DPF 12 is stopped, and step S15 is executed again and subsequent steps are executed. Likewise, when it is determined in step S21 that the estimated value Sm regarding the sulfur compounds is less than the release-demanding amount S0, step S15 is executed again and the subsequent steps are executed.

As described above, with the exhaust gas control apparatus for the internal combustion engine in accordance with the second embodiment, it is possible to achieve the aforementioned advantageous effects (1) to (10), and to achieve the following advantageous effects. (11) As an exceptional process in the sulfur release mode, the process of releasing the sulfur compounds accumulated in the diesel oxidation catalyst 11 and the DPF 12 is executed through the temperature-raising control for the diesel oxidation catalyst 11 and the DPF 12, when the estimated value Sm of the amount of accumulation of the sulfur compounds reaches the release-demanding amount S0 before the amount of deposition of the particulate components in the DPF 12 reaches the removal-demanding amount PM0. Therefore, while the two modes, that is, the oxidation mode and the sulfur release mode are provided, the release of the sulfur compounds is promoted without fulfillment of the execution condition for the oxidation mode if it becomes necessary to release the sulfur compounds. This avoids the situation where the sulfur compounds are excessively accumulated in the diesel oxidation catalyst 11 and the DPF 12. Thus, it is possible to more accurately maintain the functions of the diesel oxidation catalyst 11 and the DPF 12.

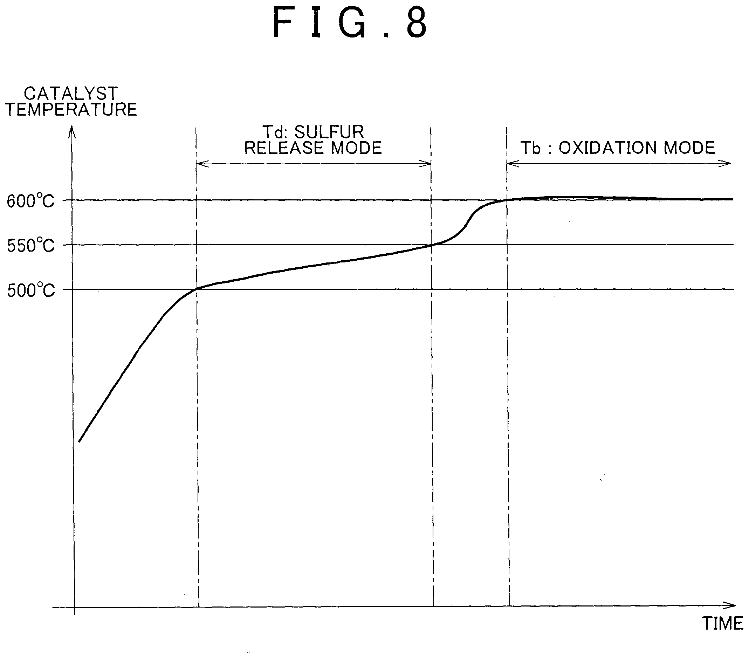

(THIRD EMBODIMENT) Next, an exhaust gas control apparatus for an internal combustion engine in accordance with a third embodiment of the invention will be described. Differences between the first embodiment and the third embodiment will be mainly described with reference to FIG. 8. The basic configuration of the exhaust gas control apparatus in accordance with the third embodiment is substantially the same as that of the first embodiment, and substantially the same elements as those of the first embodiment are denoted by the same reference numerals in FIG. 8, and redundant descriptions will be omitted below.

As shown in FIG. 8, the control means 20 in this embodiment executes the recovery process for the diesel oxidation catalyst 11 and the DPF 12, for example, when the amount of accumulation of the sulfur compounds in the diesel oxidation catalyst 11 and the DPF 12 reaches the release-demanding amount and the amount of deposition of the particulate components in the DPF 12 reaches the removal-demanding amount.

When the recovery process in the embodiment is executed, firstly the temperatures of the diesel oxidation catalyst 11 and the DPF 12 are raised to about 500°C by executing the temperature-raising control of raising the temperatures of the diesel oxidation catalyst 11 and the DPF 12. Then, the temperatures of the diesel oxidation catalyst 11 and the DPF 12 are gradually raised from about 500°C to about 550°C (period Td). Thus, the sulfur release mode, in which only the sulfur compounds accumulated in the diesel oxidation catalyst 11 and the DPF 12 are released, is executed prior to removal of the particulate components accumulated in the DPF 12.

In this embodiment, since the temperatures of the diesel oxidation catalyst 11 and the DPF 12 are gradually raised, the temperature-raised period needed for the release is shortened while the sulfur compounds released from the diesel oxidation catalyst 11 and the DPF 12 are kept at such low concentration that the generation of white smoke of the sulfur compounds is restrained. Therefore, in this embodiment, it is possible to complete the sulfur release mode in a shorter time than in the first embodiment (period Td < period Ta). The execution time of the sulfur release mode is determined, for example, on the basis of the amount of release of the sulfur compounds per unit time in accordance with the temperature of the diesel oxidation catalyst 11 (and the DPF 12) shown above with reference to FIG. 2 and the estimated value Sm of the amount of accumulation of the sulfur compounds.

Then, for example, after the temperature-raised period (period Td) in accordance with the amount of accumulation of the sulfur compounds elapses, the temperatures of the diesel oxidation catalyst 11 and the DPF 12 are further raised from about 550°C to about 600°C, and then the oxidation mode is executed (period Tb). In this embodiment, since the temperatures of the diesel oxidation catalyst 11 and the DPF 12 have been raised to about 550°C when the execution of the sulfur release mode is completed, it is possible to switch from the sulfur release mode to the oxidation mode by raising the temperatures of the diesel oxidation catalyst 11 and the DPF 12 merely by about 50°C.

Thus, in this embodiment as well, the release of the sulfur compounds accumulated in the diesel oxidation catalyst 11 and the DPF 12 and the removal of the particulate components deposited in the DPF 12 are carried out by executing the sulfur release mode and the oxidation mode in a step-by-step manner.

As described above, with the exhaust gas control apparatus for the internal combustion engine in accordance with the embodiment, it is possible to achieve the aforementioned advantageous effects (1) to (6) and (8) to (10), and to achieve the following advantageous effect instead of the effect (7).

(7A) After the temperatures of the diesel oxidation catalyst 11 and the DPF 12 are gradually raised from about 500°C to about 550°C by the sulfur release mode, the mode is switched from the sulfur release mode to the oxidation mode. Therefore, the time needed for the release of the sulfur compounds is shortened, and the mode is smoothly switched from the sulfur release mode to the oxidation mode.

(OTHER EMBODIMENTS) The foregoing embodiments can also be implemented in other forms as follows. In,the first embodiment, in the sulfur release mode, the temperatures of the diesel oxidation catalyst 11 and the DPF 12 are maintained at about 500°C, which is in the above-described temperature range, for a given period. However, the invention is not limited to this configuration. The temperature, to which the temperatures of the diesel oxidation catalyst 11 and the DPF 12 are raised in the sulfur release mode, may be set to any temperature in the temperature range of about 500°C to about 550°C. For example, the temperatures of the diesel oxidation catalyst 11 and the DPF 12 may be maintained at about 550°C.

Although in the foregoing embodiments, the diesel oxidation catalyst 11 and the DPF 12 are heated through the addition of fuel injected from the fuel injection valves 3 or from the fuel addition device 15. However, the invention is not limited to this configuration. For example, a fuel addition valve dedicated for adding fuel to the diesel oxidation catalyst 11 and the DPF 12 may be provided at the intake side of the diesel oxidation catalyst 11. Furthermore, the reducing agent added for the diesel oxidation catalyst 11 and the DPF 12 is not limited to fuel, and may be any material as long as the material is able to accelerate the release of the sulfur compounds accumulated in the diesel oxidation catalyst 11 and the DPF 12 or the removal of the particulate components accumulated in the DPF 12.

In the foregoing embodiments, the temperatures of the diesel oxidation catalyst 11 and the DPF 12 are raised by adding the reducing agent. However, the invention is not limited to this configuration. For example, an electric heat or a glow plug may be provide upstream of the diesel oxidation catalyst 11 and the DPF 12. In this configuration, by activating the electric heater or the glow plug, the exhaust gas that is to flow into the diesel oxidation catalyst 11 or the DPF 12 may be heated so that the diesel oxidation catalyst 11 and the DPF 12 are heated as the heated exhaust gas flows thereinto. In this case, when the sulfur compounds are released after the amount of accumulation of the sulfur compounds reaches the release-demanding amount, the temperature-raising control for the diesel oxidation catalyst 11 and the DPF 12 is executed in the foregoing temperature range by using the electric heater or the glow plug. Thus, the temperature-raising energy needed for activating the electric heater or the glow plug is saved.

In the foregoing embodiments, as the execution time of the sulfur release mode, the temperature-raised period Ta is set to the shortest period in the range of periods, in which all the sulfur compounds accumulated in the diesel oxidation catalyst 11 and the DPF 12 are released. However, the invention is not limited to this configuration. The sulfur release mode may be executed for a time (period) that is longer than the temperature-raised period Ta that is set to the shortest period as described above, in order to ensure reliable release of the sulfur compounds. In short, the execution time (temperature-raised period) of the sulfur release mode may be set to any time (any period) as long as all the sulfur compounds accumulated in the diesel oxidation catalyst 11 and the DPF 12 are released in the execution time (temperature-raised period). Furthermore, as for the execution time of the sulfur release mode, a time, which allows the release of all the sulfur compounds in the amount indicated by the release-demanding amount S0, may be determined, and this determined time may be used as a fixed execution time.

In the foregoing embodiments, the estimated value Sm of the amount of accumulation of the sulfur compounds in the diesel oxidation catalyst 11 and the DPF 12 is determined on the basis of the amount of fuel consumed in the diesel engine 1. However, the invention is not limited to this configuration. For example, the estimated value Sm of the amount of accumulation of the sulfur compounds in the diesel oxidation catalyst 11 and the DPF 12 may be determined on the basis of the flow rate of exhaust gas flowing into the diesel oxidation catalyst 11 and the DPF 12, the operation state of the diesel engine 1, the operation time of the diesel engine 1, etc.

In the first embodiment, after the temperatures of the diesel oxidation catalyst 11 and the DPF 12 are kept at about 500°C, which is in the foregoing temperature range, for a given period in the sulfur release mode, the mode is switched from the sulfur release mode to the oxidation mode by further raising the temperatures of the diesel oxidation catalyst 11 and the DPF12. In the third embodiment, the mode is switched from the sulfur release mode to the oxidation mode after the temperatures of the diesel oxidation catalyst 11 and the DPF 12 are gradually raised from about 500°C to about 550°C in the sulfur release mode. However, the invention is not limited to the configuration. In the sulfur release mode, the temperatures of the diesel oxidation catalyst 11 and the DPF 12 may be kept in the range of about 500°C to about 550°C for a predetermined period of time in any manner. For example, the temperatures of the diesel oxidation catalyst 11 and the DPF 12 may be raised or lowered in the range of about 500°C to about 550°C.

In the foregoing embodiments, when the sulfur compounds are released, the control means 20 executes the temperature-raising control for the diesel oxidation catalyst 11 and the DPF 12 in the temperature range of 500°C to 550°C. However, the invention is not limited to this configuration. The temperature range employed when the temperature-raising control for the diesel oxidation catalyst 11 and the DPF 12 is executed may be, for example, the range of temperatures lower than about 500°C or the range of temperatures higher than or equal to about 551°C, as long as in the temperature range, it is possible to maintain the characteristic in which the sulfur compounds are gradually released due to the temperature raise, in the low concentration state in which the generation of white smoke of the sulfur compounds is restrained.

In the foregoing embodiments, the diesel oxidation catalyst 11 and the DPF 12 provided in the casing 13 are employed as the exhaust gas cleaning portion. However, the invention is not limited to this configuration. The exhaust gas cleaning portion that is subjected to the temperature-raising control may be any exhaust gas cleaning portion, as long as the exhaust gas cleaning portion collects the particulate components in exhaust gas, and in which the sulfur compounds are accumulated. For example, the exhaust gas cleaning portion may be only a DPF.

In the foregoing embodiments, the diesel engine 1 is employed as the internal combustion engine. However, the invention is not limited to this configuration. The above-described exhaust gas control apparatus may be provided for any internal combustion engine as long as particulate components and sulfur compounds are generated due to combustion of fuel in the engine.

## Claims

1. An exhaust gas control apparatus for an internal combustion engine, the exhaust gas control apparatus including an exhaust gas cleaning portion (11, 12) which is disposed in an exhaust system of the internal combustion engine mounted in a vehicle, and which collects particulate components contained in exhaust gas, and in which sulfur compounds contained in the exhaust gas are accumulated, wherein in the exhaust gas control apparatus, exhaust gas is cleaned and a recovery process for the exhaust gas cleaning portion (11, 12) is executed, the exhaust gas control apparatus **characterized by** comprising:
control means (20) for estimating an amount of deposition of the particulate components and an amount of accumulation of the sulfur compounds in the exhaust gas cleaning portion (11, 12), and
reducing agent valve (3) or reducing agent addition device (15) or glow plug or electric heater for raising the temperature of the exhaust gas cleaning portion (11, 12);
wherein in the control means (20), an oxidation mode and a sulfur release mode are provided as modes in which the temperature of the exhaust gas cleaning portion (11, 12) is controlled to be raised;
wherein in the oxidation mode, the particulate components deposited in the exhaust gas cleaning portion (11, 12) are removed from the exhaust gas cleaning portion (11, 12) by oxidizing the particulate components on a condition that the estimated amount of deposition of the particulate components in the exhaust gas cleaning portion (11, 12) has reached a removal-demanding amount of the particulate components;
wherein in the sulfur release mode, the sulfur compounds accumulated in the exhaust gas cleaning portion (11, 12) are released from the exhaust gas cleaning portion (11, 12) by a temperature-raising control, wherein a temperature of the exhaust gas cleaning portion (11, 12) is raised into a temperature range of 500° to 550°C in which the sulfur compounds are released and generation of white smoke of the sulfur compounds in atmosphere is restrained, when the estimated amount of accumulation of the sulfur compounds reaches a release-demanding amount and when the condition for the oxidation mode is fulfilled; and
wherein the control means (20) executes the sulfur release mode prior to execution of the oxidation mode;
**characterized in that** the temperature of the exhaust gas cleaning portion (11, 12) is gradually raised from about 500°C to about 550°C in the sulfur release mode.

2. The exhaust gas control apparatus according to claim 1, wherein a characteristic of release of the sulfur compounds due to the temperature-raising control for the exhaust gas cleaning portion (11, 12) is a characteristic in which the sulfur compounds start to be released when the temperature of the exhaust gas cleaning portion (11, 12) reaches the temperature range, and during a period until the temperature of the exhaust gas cleaning portion (11, 12) exceeds the temperature range, the sulfur compounds are gradually released in a low concentration state in which the generation of the white smoke is restrained.

3. The exhaust gas control apparatus according to claims 1 or 2, wherein in a case where the temperature-raising control for the exhaust gas cleaning portion (11, 12) is to be executed, when the temperature of the exhaust gas cleaning portion (11, 12) is above the temperature range due to high-load operation of the internal combustion engine, the control means (20) initializes the estimated amount of accumulation of the sulfur compounds to 0.

4. The exhaust gas control apparatus according to claim 3, wherein when the temperature of the exhaust gas cleaning portion (11, 12) is higher than or equal to 600°C, the control means (20) determines that the temperature of the exhaust gas cleaning portion (11, 12) is above the temperature range, and initializes the estimated amount of accumulation of the sulfur compounds to 0.

5. The exhaust gas control apparatus according to any one of claims 1 to 4, wherein the control means (20) switches from the sulfur release mode to the oxidation mode by further raising the temperature of the exhaust gas cleaning portion (11, 12) after the control means (20) keeps the temperature of the exhaust gas cleaning portion (11, 12) in the temperature range for a given period in the sulfur release mode.

6. The exhaust gas control apparatus according to claim 5, wherein in the oxidation mode, the control means (20) keeps the temperature of the exhaust gas cleaning portion (11, 12) at 600°C.

7. The exhaust gas control apparatus according to any one of claims 1 to 6, wherein the control means (20) estimates the amount of accumulation of the sulfur compounds in the exhaust gas cleaning portion (11, 12), on the basis of an amount of fuel consumed in the internal combustion engine.

8. The exhaust gas control apparatus according to any one of claims 1 to 7, wherein when the sulfur compounds are released, the control means (20) sets a temperature-raised period in which the temperature of the exhaust gas cleaning portion (11, 12) is kept in the temperature range, according to the estimated amount of accumulation of the sulfur compounds.

9. The exhaust gas control apparatus according to any one of claims 1 to 8, wherein the internal combustion engine is a diesel engine, and the exhaust gas cleaning portion (11, 12) includes a diesel particulate filter and a diesel oxidation catalyst.

10. A control method for an exhaust gas control apparatus for an internal combustion engine, the exhaust gas control apparatus including an exhaust gas cleaning portion (11, 12) which is disposed in an exhaust system of the internal combustion engine mounted in a vehicle, and which collects particulate components contained in exhaust gas, and in which sulfur compounds contained in the exhaust gas are accumulated, the control method **characterized by** comprising:
estimating an amount of deposition of the particulate components and an amount of accumulation of the sulfur compounds in the exhaust gas cleaning portion (11, 12);
determining whether the estimated amount of accumulation of the sulfur compounds has reached a release-demanding amount; and
an oxidation mode and a sulfur release mode as modes in which the temperature of the exhaust gas cleaning portion (11, 12) is controlled to be raised by adding a reducing agent or by using an electric heater or a glow plug; and
wherein in the oxidation mode, the particulate components deposited in the exhaust gas cleaning portion (11, 12) are removed from the exhaust gas cleaning portion (11, 12) by oxidizing the particulate components on a condition that the estimated amount of deposition of the particulate components in the exhaust gas cleaning portion (11, 12) has reached a removal-demanding amount of the particulate components; and
wherein in the sulfur release mode, the sulfur compounds accumulated in the exhaust gas cleaning portion (11, 12) are released from the exhaust gas cleaning portion (11, 12) by a temperature-raising control, wherein a temperature of the exhaust gas cleaning portion (11, 12) is raised into a temperature range of 500 °C to 550 °C, in which the sulfur compounds are released and generation of white smoke of the sulfur compounds in atmosphere is restrained, when it is determined that the estimated amount of accumulation of the sulfur compounds has reached the release-demanding amount and when the condition for the oxidation mode is fulfilled; and
wherein the sulfur release mode is executed prior to execution of the oxidation mode,
**characterized in that** the temperature of the exhaust gas cleaning portion (11, 12) is gradually raised from about 500°C to about 550°C in the sulfur release mode.

## Patentansprüche

1. Abgassteuerungsvorrichtung für einen Verbrennungsmotor, wobei die Abgassteuerungsvorrichtung einen Abgasreinigungsabschnitt (11, 12) aufweist, der in einem Abgassystem des in einem Fahrzeug montierten Verbrennungsmotors angeordnet ist und der im Abgas enthaltene partikelförmige Komponenten sammelt und in dem im Abgas enthaltene Schwefelverbindungen angesammelt werden, wobei in der Abgassteuerungsvorrichtung das Abgas gereinigt wird und ein Rückgewinnungsprozess für den Abgasreinigungsabschnitt (11, 12) ausgeführt wird, **gekennzeichnet durch**:
Steuerungsmittel (20) zum Abschätzen einer Ablagerungsmenge der partikelförmigen Komponenten und einer Ansammlungsmenge der Schwefelverbindungen in dem Abgasreinigungsabschnitt (11, 12); und
ein Reduktionsmittelventil (3) oder eine Reduktionsmittelzugabevorrichtung (15) oder eine Glühkerze oder ein elektrischer Heizer zur Steigerung der Temperatur des Abgasreinigungsabschnitts (11, 12);
wobei in dem Steuerungsmittel (20) ein Oxidationsmodus und ein Schwefelfreisetzungsmodus als Modi vorgesehen sind, in denen die Temperatur des Abgasreinigungsabschnitts (11, 12) so gesteuert wird, dass sie sich erhöht;
wobei in dem Oxidationsmodus die in dem Abgasreinigungsabschnitt (11, 12) abgelagerten partikelförmigen Komponenten aus dem Abgasreinigungsabschnitt (11, 12) durch Oxidieren der partikelförmigen Komponenten unter der Bedingung entfernt werden, dass die geschätzte Ablagerungsmenge der partikelförmigen Komponenten in dem Abgasreinigungsabschnitt (11, 12) eine zu entfernende Menge der partikelförmigen Komponenten erreicht hat;
wobei in dem Schwefelfreisetzungsmodus die in dem Abgasreinigungsabschnitt (11, 12) angesammelten Schwefelverbindungen aus dem Abgasreinigungsabschnitt (11, 12) durch eine Temperaturerhöhungssteuerung freigesetzt werden, wobei eine Temperatur des Abgasreinigungsabschnitts (11, 12) in einen Temperaturbereich von 500°C bis 550°C erhöht wird, in dem die Schwefelverbindungen freigesetzt werden und eine Erzeugung von weißem Rauch der Schwefelverbindungen in der Atmosphäre zurückgehalten wird, wenn die geschätzte Ansammlungsmenge der Schwefelverbindungen eine freizusetzende Menge erreicht und wenn die Bedingung für den Oxidationsmodus erfüllt ist; und
wobei das Steuerungsmittel (20) den Schwefelfreisetzungsmodus vor der Ausführung des Oxidationsmodus ausführt;
**dadurch gekennzeichnet, dass**
die Temperatur des Abgasreinigungsabschnitts (11, 12) in dem Schwefelfreisetzungsmodus allmählich von etwa 500°C auf etwa 550°C erhöht wird.

2. Abgassteuerungsvorrichtung nach Anspruch 1, wobei eine Eigenschaft der Freisetzung der Schwefelverbindungen aufgrund der Temperaturerhöhungssteuerung für den Abgasreinigungsabschnitt (11, 12) eine Eigenschaft ist, bei der die Schwefelverbindungen beginnen, freigesetzt zu werden, wenn die Temperatur des Abgasreinigungsabschnitts (11, 12) den Temperaturbereich erreicht, und während eines Zeitraums bis die Temperatur des Abgasreinigungsabschnitts (11, 12) den Temperaturbereich überschreitet, die Schwefelverbindungen allmählich in einem niedrigen Konzentrationszustand freigesetzt werden, bei dem die Erzeugung des weißen Rauchs zurückgehalten wird.

3. Abgassteuerungsvorrichtung nach Anspruch 1 oder 2, wobei in einem Fall, in dem die Temperaturerhöhungssteuerung für den Abgasreinigungsabschnitt (11, 12) ausgeführt werden soll, wenn die Temperatur des Abgasreinigungsabschnitts (11, 12) aufgrund eines Hochlastbetriebs des Verbrennungsmotors über dem Temperaturbereich liegt, das Steuerungsmittel (20) die geschätzte Ansammlungsmenge der Schwefelverbindungen auf 0 initialisiert.

4. Abgassteuerungsvorrichtung nach Anspruch 3, wobei wenn die Temperatur des Abgasreinigungsabschnitts (11, 12) höher als oder gleich 600°C ist, das Steuerungsmittel (20) feststellt, dass die Temperatur des Abgasreinigungsabschnitts (11, 12) oberhalb des Temperaturbereichs liegt und die geschätzte Ansammlungsmenge der Schwefelverbindungen auf 0 initialisiert.

5. Abgassteuerungsvorrichtung nach einem der Ansprüche 1 bis 4, wobei das Steuerungsmittel (20) von dem Schwefelfreisetzungsmodus in den Oxidationsmodus umschaltet, indem es die Temperatur des Abgasreinigungsabschnitts (11, 12) weiter erhöht, nachdem das Steuerungsmittel (20) im Schwefelfreisetzungsmodus die Temperatur des Abgasreinigungsabschnitts (11, 12) für eine gegebene Zeitspanne in dem Temperaturbereich hält.

6. Abgassteuerungsvorrichtung nach Anspruch 5, wobei im Oxidationsmodus das Steuerungsmittel (20) die Temperatur des Abgasreinigungsabschnitts (11, 12) auf 600°C hält.

7. Abgassteuerungsvorrichtung nach einem der Ansprüche 1 bis 6, wobei das Steuerungsmittel (20) die Ansammlungsmenge der Schwefelverbindungen in dem Abgasreinigungsabschnitt (11, 12) auf der Grundlage einer in dem Verbrennungsmotor verbrauchten Kraftstoffmenge abschätzt.

8. Abgassteuerungsvorrichtung nach einem der Ansprüche 1 bis 7, wobei das Steuerungsmittel (20) beim Freisetzen der Schwefelverbindungen eine temperaturerhöhte Zeitspanne, in der die Temperatur des Abgasreinigungsabschnitts (11, 12) in dem Temperaturbereich gehalten wird, gemäß der geschätzten Ansammlungsmenge der Schwefelverbindungen festlegt.

9. Abgassteuerungsvorrichtung nach einem der Ansprüche 1 bis 8, wobei der Verbrennungsmotor ein Dieselmotor ist und der Abgasreinigungsabschnitt (11, 12) einen Dieselpartikelfilter und einen Dieseloxidationskatalysator aufweist.

10. Steuerungsverfahren für eine Abgassteuerungsvorrichtung für einen Verbrennungsmotor, wobei die Abgassteuerungsvorrichtung einen Abgasreinigungsabschnitt (11, 12) aufweist, der in einem Abgassystem des in einem Fahrzeug montierten Verbrennungsmotors angeordnet ist und der im Abgas enthaltene partikelförmige Komponenten sammelt und in dem im Abgas enthaltene Schwefelverbindungen angesammelt werden, **gekennzeichnet durch**:
Schätzen einer Ablagerungsmenge der partikelförmigen Komponenten und einer Ansammlungsmenge der Schwefelverbindungen in dem Abgasreinigungsabschnitt (11, 12);
Bestimmen, ob die geschätzte Ansammlungsmenge der Schwefelverbindungen eine freizusetzende Menge erreicht hat; und
einen Oxidationsmodus und einen Schwefelfreigabemodus als Modi, in denen die Temperatur des Abgasreinigungsabschnitts (11, 12) so gesteuert wird, dass sie durch Zugabe eines Reduktionsmittels oder durch Verwendung eines elektrischen Heizers oder einer Glühkerze erhöht wird; und
wobei in dem Oxidationsmodus die in dem Abgasreinigungsabschnitt (11, 12) abgelagerten partikelförmigen Komponenten aus dem Abgasreinigungsabschnitt (11, 12) durch Oxidieren der partikelförmigen Komponenten unter der Bedingung entfernt werden, dass die geschätzte Ablagerungsmenge der partikelförmigen Komponenten in dem Abgasreinigungsabschnitt (11, 12) eine zu entfernende Menge der partikelförmigen Komponenten erreicht hat; und
wobei in dem Schwefelfreisetzungsmodus die in dem Abgasreinigungsabschnitt (11, 12) angesammelten Schwefelverbindungen durch eine temperatursteigernde Steuerung aus dem Abgasreinigungsabschnitt (11, 12) freigesetzt werden, wobei eine Temperatur des Abgasreinigungsabschnitts (11, 12) in einen Temperaturbereich von 500°C bis 550°C erhöht wird, in dem die Schwefelverbindungen freigesetzt werden und die Erzeugung von weißem Rauch der Schwefelverbindungen in der Atmosphäre zurückgehalten wird, wenn festgestellt wird, dass die geschätzte Ansammlungsmenge der Schwefelverbindungen die freisetzungserfordernde Menge erreicht hat und wenn die Bedingung für den Oxidationsmodus erfüllt ist; und
wobei der Schwefelfreisetzungsmodus vor der Ausführung des Oxidationsmodus ausgeführt wird,
**dadurch gekennzeichnet, dass**
die Temperatur des Abgasreinigungsabschnitts (11, 12) in dem Schwefelfreisetzungsmodus allmählich von etwa 500°C auf etwa 550°C erhöht wird.

## Revendications

1. Appareil de contrôle de gaz d'échappement pour un moteur à combustion interne, l'appareil de contrôle de gaz d'échappement incluant une portion de purification de gaz d'échappement (11, 12) qui est disposée dans un système d'échappement du moteur à combustion interne monté dans un véhicule, et qui recueille des constituants particulaires contenus dans les gaz d'échappement, et dans lequel des composés de soufre contenus dans les gaz d'échappement sont accumulés, dans lequel dans l'appareil de contrôle de gaz d'échappement, les gaz d'échappement sont purifiés et un procédé de récupération pour la portion de purification de gaz d'échappement (11, 12) est exécuté, l'appareil de contrôle de gaz d'échappement **caractérisé en ce qu'**il comprend :
un moyen de contrôle (20) pour estimer une quantité de dépôt des constituants particulaires et une quantité d'accumulation des composés de soufre dans la portion de purification de gaz d'échappement (11, 12), et
une valve d'agent réducteur (3) ou un dispositif d'addition d'agent réducteur (15) ou une bougie de préchauffage ou un dispositif de chauffage électrique pour élever la température de la portion de purification de gaz d'échappement (11, 12) ;
dans lequel dans le moyen de contrôle (20), un mode d'oxydation et un mode de libération de soufre sont fournis comme modes dans lesquels la température de la portion de purification de gaz d'échappement (11, 12) est contrôlée pour être élevée ;
dans lequel dans le mode d'oxydation, les constituants particulaires déposés dans la portion de purification de gaz d'échappement (11, 12) sont éliminés de la portion de purification de gaz d'échappement (11, 12) par oxydation des constituants particulaires à condition que la quantité estimée de dépôt des constituants particulaires dans la portion de purification de gaz d'échappement (11, 12) a atteint une quantité de demande d'élimination des constituants particulaires ;
dans lequel dans le mode de libération de soufre, les composés de soufre accumulés dans la portion de purification de gaz d'échappement (11, 12) sont libérés de la portion de purification de gaz d'échappement (11, 12) par un contrôle élevant la température, dans lequel une température de la portion de purification de gaz d'échappement (11, 12) est élevée dans un intervalle de température de 500° à 550°C dans lequel les composés de soufre sont libérés et la production de fumée blanche des composés de soufre dans l'atmosphère est restreinte, lorsque la quantité estimée d'accumulation des composés de soufre atteint une quantité de demande de libération et lorsque la condition pour le mode d'oxydation est remplie ; et
dans lequel le moyen de contrôle (20) exécute le mode de libération de soufre avant l'exécution du mode d'oxydation ;
**caractérisé en ce que** la température de la portion de purification de gaz d'échappement (11, 12) est progressivement élevée d'environ 500°C à environ 550°C dans le mode de libération de soufre.

2. Appareil de contrôle de gaz d'échappement selon la revendication 1, dans lequel une caractéristique de libération des composés de soufre due au contrôle d'élévation de température pour la portion de purification de gaz d'échappement (11, 12) est une caractéristique dans laquelle les composés de soufre commencent à être libérés lorsque la température de la portion de purification de gaz d'échappement (11, 12) atteint l'intervalle de température, et pendant une période jusqu'à ce que la température de la portion de purification de gaz d'échappement (11, 12) excède l'intervalle de température, les composés de soufre sont progressivement libérés dans un état de faible concentration dans lequel la production de la fumée blanche est restreinte.

3. Appareil de contrôle de gaz d'échappement selon la revendication 1 ou 2, dans lequel dans un cas où le contrôle élevant la température pour la portion de purification de gaz d'échappement (11, 12) doit être exécuté, lorsque la température de la portion de purification de gaz d'échappement (11, 12) est supérieure à l'intervalle de température due à une opération à charge élevée du moteur à combustion interne, le moyen de contrôle (20) initialise la quantité estimée d'accumulation des composés de soufre à 0.

4. Appareil de contrôle de gaz d'échappement selon la revendication 3, dans lequel lorsque la température de la portion de purification de gaz d'échappement (11, 12) est supérieure ou égale à 600°C, le moyen de contrôle (20) détermine que la température de la portion de purification de gaz d'échappement (11, 12) est supérieure à l'intervalle de température, et initialise la quantité estimée d'accumulation des composés de soufre à 0.

5. Appareil de contrôle de gaz d'échappement selon l'une quelconque des revendications 1 à 4, dans lequel le moyen de contrôle (20) commute du mode de libération de soufre au mode d'oxydation en élevant encore la température de la portion de purification de gaz d'échappement (11, 12) après que le moyen de contrôle (20) maintient la température de la portion de purification de gaz d'échappement (11, 12) dans l'intervalle de température pendant une période donnée dans le mode de libération de soufre.

6. Appareil de contrôle de gaz d'échappement selon la revendication 5, dans lequel dans le mode d'oxydation, le moyen de contrôle (20) maintient la température de la portion de purification de gaz d'échappement (11, 12) à 600°C.

7. Appareil de contrôle de gaz d'échappement selon l'une quelconque des revendications 1 à 6, dans lequel le moyen de contrôle (20) estime la quantité d'accumulation des composés de soufre dans la portion de purification de gaz d'échappement (11, 12), sur la base d'une quantité de carburant consommé dans le moteur à combustion interne.

8. Appareil de contrôle de gaz d'échappement selon l'une quelconque des revendications 1 à 7, dans lequel lorsque les composés de soufre sont libérés, le moyen de contrôle (20) fixe une période élevée en température dans laquelle la température de la portion de purification de gaz d'échappement (11, 12) est maintenue dans l'intervalle de température, selon la quantité estimée d'accumulation des composés de soufre.

9. Appareil de contrôle de gaz d'échappement selon l'une quelconque des revendications 1 à 8, dans lequel le moteur à combustion interne est un moteur diesel, et la portion de purification de gaz d'échappement (11, 12) inclut un filtre à particule diesel et un catalyseur d'oxydation diesel.

10. Procédé de contrôle pour un appareil de contrôle de gaz d'échappement pour un moteur à combustion interne, l'appareil de contrôle de gaz d'échappement incluant une portion de purification de gaz d'échappement (11, 12) qui est disposée dans un système d'échappement du moteur à combustion interne monté dans un véhicule, et qui recueille des constituants particulaires contenus dans les gaz d'échappement, et dans lequel des composés de soufre contenus dans les gaz d'échappement sont accumulés, le procédé de contrôle **caractérisé en ce qu'**il comprend :
l'estimation d'une quantité de dépôt des constituants particulaires et d'une quantité d'accumulation des composés du soufre dans la portion de purification de gaz d'échappement (11, 12) ;
la détermination si la quantité estimée d'accumulation des composés du soufre a atteint une quantité de demande de libération ; et
un mode d'oxydation et un mode de libération du soufre comme modes dans lesquels la température de la portion de purification de gaz d'échappement (11, 12) est contrôlée pour être élevée par addition d'un agent réducteur ou en utilisant un dispositif de chauffage électrique ou une bougie de préchauffage ; et
dans lequel dans le mode d'oxydation, les constituants particulaires déposés dans la portion de purification de gaz d'échappement (11, 12) sont éliminés de la portion de purification de gaz d'échappement (11, 12) par oxydation des constituants particulaires à condition que la quantité estimée de dépôt des constituants particulaires dans la portion de purification de gaz d'échappement (11, 12) a atteint une quantité de demande d'élimination des constituants particulaires ; et
dans lequel dans le mode de libération du soufre, les composés du soufre accumulés dans la portion de purification de gaz d'échappement (11, 12) sont libérés de la portion de purification de gaz d'échappement (11, 12) par un contrôle élevant la température, dans lequel une température de la portion de purification de gaz d'échappement (11, 12) est élevée dans un intervalle de température de 500°C à 550°C, dans lequel les composés du soufre sont libérés et la production de fumée blanche des composés du soufre dans l'atmosphère est restreinte, lorsqu'il est déterminé que la quantité estimée d'accumulation des composés du soufre a atteint la quantité de demande de libération et lorsque la condition pour le mode d'oxydation est remplie ; et
dans lequel le mode de libération du soufre est exécuté avant l'exécution du mode d'oxydation,
**caractérisé en ce que** la température de la portion de purification de gaz d'échappement (11, 12) est progressivement élevée d'environ 500°C à environ 550°C dans le mode de libération du soufre.
